(19) Europäisches Patentamt
European Patent Office
Office européen des brevets

(11) EP 1 489 542 A1

(12) **EUROPEAN PATENT APPLICATION**
published in accordance with Art. 158(3) EPC

(43) Date of publication:
**22.12.2004 Bulletin 2004/52**

(21) Application number: **03712783.4**

(22) Date of filing: **20.03.2003**

(51) Int Cl.7: **G06F 17/60**

(86) International application number:
**PCT/JP2003/003388**

(87) International publication number:
**WO 2003/081500 (02.10.2003 Gazette 2003/40)**

(84) Designated Contracting States:
**DE FR GB**

(30) Priority: **26.03.2002 JP 2002086943**
**10.02.2003 JP 2003032986**

(71) Applicant: **MATSUSHITA ELECTRIC INDUSTRIAL CO., LTD.**
**Kadoma-shi, Osaka 571-8501 (JP)**

(72) Inventors:
- **NAKANISHI, Takashi**
  **Kobe-shi, Hyogo 655-0872 (JP)**
- **MURATA, Kazuyuki**
  **Kyotanabe-shi, Kyoto 610-0352 (JP)**
- **YAMAGUCHI, Takehito**
  **Hirakata-shi, Osaka 573-0035 (JP)**

(74) Representative: **Holmes, Miles et al**
**Novagraaf International S.A.**
**25, avenue du Pailly**
**1220 Les Avanchets, Geneva (CH)**

(54) **COMMUNICATION DEVICE, PRINTER, AND EXPENDABLE PARTS ORDER ACCEPTING DEVICE**

(57) The present invention pertains to an STB (100) used by being connected to a printer (200) and a content distributing apparatus (21) that receives an order for consumables (223a-223c) used by the printer (200). The STB (100) includes the following: a communication I/F unit (103) for obtaining a content with which a point value is associated; a job management unit (106b) which outputs the obtained content so as to allow the printer (200) to print it, and also accumulates the point value associated with the content; a point accumulation unit (109); a printer I/F unit (107); and an ordering control unit (106a) for transmitting, to the content distributing apparatus (21), a notification for ordering consumables, together with the accumulated point value. The content distributing apparatus (21) receives the order for the consumables from the STB (100), and performs charging processing of reducing the price of the consumables by the amount equivalent to the point value transmitted together with the order.

FIG. 1

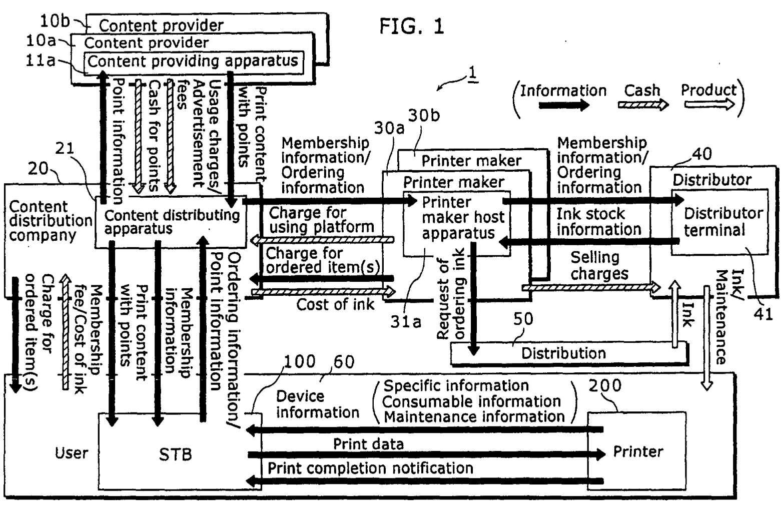


EP 1 489 542 A1

## Description

### Technical Field

The present invention relates to a printing apparatus, a communication apparatus for outputting a content to the printing apparatus, a consumable's order receiving apparatus for receiving an order for the consumables used by the printing apparatus. In particular, the present invention relates to a technique to activate a market of printer consumables.

### Background Art

Recently, along with a wide use of computers, digital cameras and the like, printers also have become widely used as one of the peripherals to print out. An output of images with a high quality comparable to a color print obtained by a conventional steel camera has been achieved as the printers offer high performance. Along with the versatile use of the printers, a method for managing the consumables on the user basis has also been suggested (see reference to Japanese Laid-Open Publication No. 2002-331728).

The reality, however, is that the price of printers is reduced due to a fierce competition in the market or the like, and the makers of printers expect that the profit can be mainly gained by establishing a business model related to the consumables (e.g., inks, ribbons, and print sheets). That is to say, the makers have not discovered a profit structure other than such consumables.

The users, on the other hand, have a feeling that the price of the printer consumables is relatively expensive. Based on such feeling, some users do not print frequently or do not feel at ease in printing.

Under such circumstances, the purchase of the printer consumables does not increase as much as the makers expect. Consequently, it is a vicious circle that the price of the consumables does not get cheaper.

The problem does not concern only the price of the printer consumables, but also the situation in which the user finds. For example, the user does not know that a consumable runs out until he/she switches on the printer or finds oneself in trouble, e.g., a print error such as a paper jam frequently occurs.

The present invention is conceived in view of the above circumstances, and an aim of the present invention is to provide the communication apparatus, the printing apparatus, the consumable's order receiving apparatus, and the like, which can improve the user's convenience relating to the printer consumables.

To be more precise, an object of the present invention is to encourage the user to use the printer and activate the market as well as the distribution of the printer consumables so that the consumables are provided to the user with reasonable price.

Another object of the present invention is to possibly avoid the problems such that a consumable runs out when the user desires to use the printer and that the printer frequently breaks down, and thus allows the smooth use of the printer for the user.

### Disclosure of Invention

In order to achieve the above objects, the communication apparatus according to the present invention is a communication apparatus that is used by being connected to a printing apparatus and a consumable's order receiving apparatus for receiving an order for a consumable used by the printing apparatus, the communication apparatus comprising: a content obtaining unit operable to obtain a print content with which a point value is associated; a print control unit operable to i) output print data of the obtained print content so as to cause the printing apparatus to print said print data, and ii) accumulate the point value associated with the print content; and an ordering unit operable to transmit, to the consumable's order receiving apparatus, a notification for ordering a consumable, together with the accumulated point value; wherein the consumable's order receiving apparatus receives the order for the consumable from the communication apparatus, and performs charging processing of reducing a price of the consumable by an amount equivalent to the point value transmitted together with the order.

Thus, the user can accumulate the point value each time the printing is repeated and can purchase a consumable at a low prince using the accumulated point value. Therefore, the user's financial cost involved in the printing can be reduced and the user is encouraged to use the printing apparatus (i.e., print). A positive growth circle, in which a demand for printer consumables increases, a price of the consumable is reduced, and the demand furtherly increases, is therefore expected. This activates the market of printer consumables.

The print control unit may accumulate the point value after confirming that the printing performed by the printing apparatus is completed. As the method for confirming the completion of the printing, the print control unit may confirm that the printing performed by the printing apparatus is completed, either by repeatedly performing, on the printing apparatus, polling of whether or not the printing is completed, or by obtaining a voluntary notification from the printing apparatus indicating that the printing is completed.

Thus, the point value is accumulated by the completion of the printing and the point accumulation is performed in response to the actual use of the consumable, more balance is brought to the relation between the used amount of the consumable and the amount of reduction (i.e., discount) for a purchase price.

The ordering unit may perform the transmission after detecting an occurrence of a state in which a consumable runs out, the state indicating that a remaining amount of the consumable goes below a predetermined amount. As the method for detecting that the consumable runs out, the ordering unit may detect the occurrence of the state in which a consumable runs out, by receiving a notification from the printing apparatus indicating the occurrence of the state in which a consumable runs out. The ordering unit may also detect the occurrence of the state in which a consumable runs out, in the case where the remaining amount goes below the threshold, by receiving a notification from the printing apparatus indicating the remaining amount of the consumable and comparing the remaining amount with the predetermined threshold. Then, the ordering unit may perform the transmission without obtaining an ordering instruction from an operator, after detecting the occurrence of the state in which a consumable runs out.

Thus, the processing of ordering consumables operate simultaneously with the state of the consumable in the printing apparatus so that the occurrence of the problem that the user does not notice that the consumable runs out until he/she tries to use the printing apparatus is prevented.

The ordering unit may also include a display unit for displaying on a screen the occurrence of the state in which a consumable runs out, after detecting said occurrence. The ordering unit may then perform the transmission after obtaining an ordering instruction from an operator. Thus, the user can order a consumable after having acknowledged the occurrence of the state in which a consumable runs out.

The ordering unit may also display on a screen the point value accumulated by the print control unit, and performs the transmission after obtaining an operator's instruction indicating a use of the point value. In this case, the content obtaining unit may obtain the content from a plurality of providers, the print control unit may accumulate the point value for each of the providers, and the ordering unit may display on a screen the point value accumulated by the print control unit separately for each of the providers. The communication apparatus may further include a consumable information obtaining unit operable to obtain, from the printing apparatus, consumable information for identifying a used amount of the consumable, and the ordering unit may display the obtained consumable information together with the point value.

Thus, the user can choose whether or not to use the point value accumulated so far, confirm the accumulated point value for each content provider as well as the state of the consumables.

Here, the print control unit may adjust the point value to be accumulated based on the conditions for the printing performed by the printing apparatus. To be more concrete, the print control unit may adjust the point value to be accumulated based on at least one of the following conditions: a number of sheets to be printed; a sheet size; either one-side or two-side printing; a page number to be printed on a single sheet; a quality of printing; and either color or monochrome printing. The print control unit may further accumulate the point value after adjusting the point value based on a number of pages that are printed until the printing performed by the printing apparatus is completed, in the case where the printing is not completed without errors.

Thus, the point value to be accumulated corresponds to the actual amount of the consumable consumed in the printing so that the purchase price of the consumable is reduced exactly according to the amount of the consumable used by the user.

The communication apparatus according to the present invention is a communication apparatus that is used by being connected to a content providing apparatus and a printing apparatus, and can be realized as the communication apparatus comprising: a receiving unit operable to receive, from the content providing apparatus, a print content with which a point value is associated, the point value being used for reducing a purchase price of a consumable used for a printing performed by the printing apparatus; a print control unit operable to i) output print data of the received print content so as to cause the printing apparatus to print said print data, and ii) accumulate the point value associated with the print content; and an ordering unit operable to transmit, to the content providing apparatus, a notification for purchasing a consumable, together with the accumulated point value.

In order to achieve the above objects, the printing apparatus according to the present invention is a printing apparatus comprising: a printing unit operable to receive and print print data of a print content, transmitted from a content outputting apparatus; a consumable information generating unit operable to generate consumable information for identifying a used amount of a consumable used for the printing performed by the printing unit; and a transmitting unit operable to transmit the generated consumable information to the content outputting apparatus, wherein the content outputting apparatus performs ordering processing for the consumable based on the consumable information transmitted from the transmitting unit. Here, the consumable information may include information indicating a remaining amount of the consumable or information indicating whether or not a state in which a consumable runs out has occurred, the state indicating that a remaining amount of a consumable goes below a predetermined amount.

Thus, the content outputting apparatus can order the consumables by operating simultaneously with the state of the consumables in the printing apparatus, purchase the consumables before it completely runs out, and prepare for the future occurrence of the state in which a consumable runs out.

The printing apparatus may further comprise a maintenance information generating unit operable to generate maintenance information useful for protecting the printing apparatus, wherein the transmitting unit may further transmit, to the content outputting apparatus, the maintenance information generated by the maintenance information generating unit, and the content outputting apparatus may send, to a person who performs maintenance on the printing apparatus, the maintenance information transmitted from the transmitting unit. The maintenance information may include movable history information indicating at least one of a total amount of time for power distribution since the printing apparatus is used, a moving distance of a print head, and a number of sheets used for printing. The maintenance information may also include error information indicating at least one of date and time of errors occurred in the printing apparatus in a past, a type of errors, and a number of errors depending on the type of errors.

Thus, the information relating to the execution history of the printing apparatus, the errors occurred in the past, and the like, is sent to the maker or the like. It is therefore possible to perform suitable maintenance where the circumstances in the past are considered.

The printing apparatus may further comprise a storing unit operable to store the device specific information for identifying the printing apparatus, wherein the transmitting unit may transmit, to the content outputting apparatus, the device specific information stored in the storing unit, together with the maintenance information. The consumable information, the maintenance information and the device specific information may be described in a markup language for data broadcasting, and the content outputting apparatus that is a digital broadcast receiver may analyze and display on a screen the consumable information, the maintenance information and the device specific information which are transmitted from the transmitting unit.

Thus, it is possible for the content outputting apparatus to display various information transmitted from the printing apparatus, using a function originally comprised in the content outputting apparatus as a digital broadcast receiver to analyze the BML data. The content outputting apparatus therefore does not need to have a special function for displaying the various information from the printing apparatus.

The printing apparatus according to the present invention is a printing apparatus comprising: a printing unit operable to receive and print print data of a print content, transmitted from a content outputting apparatus; a maintenance information generating unit operable to generate maintenance information (e.g., firmware version information) useful for protecting each part used for the printing performed by the printing unit; and a transmitting unit operable to transmit the generated maintenance information (e.g., firmware version information) to the content outputting apparatus, wherein the content outputting apparatus sends, to a person who performs maintenance on the printing apparatus, the maintenance information (e.g., firmware version information) transmitted from the transmitting unit. Here, the firmware version information can be, for example, the information assigned to some execution files composing a firmware or the information assigned for each microcomputer that functions as hardware.

Thus, the information relating to the version of the firmware of the printing apparatus, for instance, is sent to the maker or the like, so that it is possible to update the firmware, as required, in the case where the version of the firmware is not the latest.

The present invention can be realized not only as the communication apparatus and the printing apparatus as described above, but also as the consumable's order receiving apparatus as described above, and also as a communication system configured by the communication apparatus, the printing apparatus, and the consumable's order receiving apparatus and as a program causing a computer to function as the characteristic unit included in these apparatuses.

## Brief Description of Drawings

FIG. 1 is a diagram showing an overview of the print content distribution system according to the present invention.

FIG. 2 is a sequence diagram showing flows of information and cash relating to the distribution of a print content in the print content distribution system.

FIG. 3 is a diagram showing an example of the data of a print content with a point value.

FIG. 4 is a sequence diagram showing flows of information and cash relating to an order for printer consumables placed by the user under the print content distribution system.

FIG. 5 is a sequence diagram showing another example of flows of information and cash relating to the order for printer consumables placed by the user under the print content distribution system.

FIG. 6 is a block diagram showing in detail the structure of an STB that composes the print content distribution system.

FIG. 7 is a diagram showing an example of the point table stored in the point accumulation unit that composes the STB.

FIG. 8 is a block diagram showing in detail the structure of the printer that composes the print content distribution system.

FIG. 9 is a diagram showing an example of the device information generated by a device information generation unit of the printer.

FIG. 10 is a flowchart showing the operation of accumulating points performed by the STB.

FIG. 11 shows an example of the screen display in which the STB asks the user for a print instruction.

FIG. 12 is a flowchart showing an example of a judgment made by a print completion detecting unit of the printer for a completion of printing.

FIG. 13 is a flowchart showing an example of the judgment made by the print completion detection of the printer for the completion of printing.

FIG. 14 is a communication sequence diagram showing an example of the procedure and timing for the STB to obtain device information from the printer by means of polling.

FIG. 15 is a communication sequence diagram showing an example of the procedure and timing for the STB to obtain the device information by means of a voluntary notification from the printer.

FIG. 16 is a flowchart showing the procedure used by the printer to detect "consumable run out" in the printer.

FIG. 17 is a flowchart showing the procedure used by the STB for ordering consumables.

FIG. 18 shows an example of the screen showing a menu for ordering consumables displayed by the STB.

FIG. 19 shows an example of the screen showing maintenance information displayed by the STB.

FIG. 20 shows an example of the device information and the screen displayed by the STB, in the case where the device information in text is transmitted from the printer to the STB.

FIG. 21A, 21B and 21C are diagrams to explain a calendar/timer function for recording the events occurred in the printer.

**Best Mode for Carrying Out the Invention**

The following describes in detail the embodiments of the present invention with reference to the drawings.

FIG. 1 is a diagram showing the overview of the print content distribution system 1 according to the present invention. The present diagram shows the elements composing the print content distribution system 1 according to the present invention, and flows of information, cash and product, which are exchanged between the components and are respectively indicated by black, hatched and white arrows.

The print content distribution system 1 which encourages the user's usage of the printer and also improves the convenience relating to the printer consumables is for members only. The print content distribution system 1 is composed of the following: a content providing apparatus 11a set respectively in content providers 10a, 10b for providing a print content; a content distributing apparatus 21 set in a content distribution company 20 for distributing the print content provided by the content provider 10a or 10b; a printer maker host apparatus 31a set respectively in printer makers 30a, 30b that are printer makers; a distributor terminal installed at a distributor 40 that sells printers and printer consumables or performs maintenance for the users; a distribution 50 for storing the printer consumables in a stock room and taking them out of it for delivery; a receiving apparatus used by the user 60 (here, a digital broadcast receiver (a Set Top Box (STB)) 100 for receiving the print content distributed from the content distribution company 20; and a printer 200 connected to the STB 100.

It should be noted that the content providing apparatus 11a, the content distributing apparatus 21, the printer maker host apparatus 31a and the distributor terminal 41 are computer apparatuses in which software for realizing each function in the present system 1 or the like is installed, or the like. These computer apparatuses are connected to the STB 100 via a communication network such as the Internet. The STB 100 and the printer 200 are connected via an USB or an IEEE 1394 bus or the like, and the STB 100 is connected to a TV receiver that is not shown in the diagram. The digital broadcast from a broadcast station that is not shown in the diagram is received by the STB 100 and then displayed by the TV receiver. It should be noted that the STB 100 may be installed in the TV receiver.

FIG. 2 is a sequence diagram showing the flows of information and cash relating to the distribution of the print content under the print content distribution system 1 shown in FIG. 1.

The content providing apparatus 11a of the content provider 10a or 10b requests for distribution to the user by transmitting the print content associated with point data (or a content of the program, advertisement, or the like, that includes such print content) to the content distributing apparatus 21 in the content distribution company 20 (S1). The content providers 10a and 10b pay for the charges (e.g., a usage charge for the distribution by the content distributing apparatus 21 and advertisement fees) to the content distribution company 20 (S2). Here, point data is the data which is managed by the STB 100 or the like by means of incorporating it into a print content or by associating the point data with the print content, and which indicates the point value provided to the user when the user receives the print content and prints it with the printer. The user can receive a discount for the price to be paid at the time of purchasing printer consumables by using the accumulated points.

It should be noted that the point value is incorporated into the print content in the data form as shown in FIG. 3. Here, the example of the case where the point value is incorporated in a header (an area between a tag "<head>" and a tag "/head>") of the print content described in the Broadcast Markup Language (BML). The point value includes not only a value per print sheet (defined by a tag "<content_point>"), but also a coefficient (defined by a tag "<point_rate>"), or the like, to be multiplied in correspondence with a size of a print sheet and a color at the time of printing (monochrome/color printing).

The content distributing apparatus 21 distributes the print content whose distribution is requested to the distributing apparatus 21 of the user (a registered member) (S3). Here, the print content is distributed alone or with other content (e.g., a digital program content or an advertisement content). The digital program content received by the STB includes link information for linking to the content distributing apparatus 21 so that even when the user clicks the link information, or the like, using a remote controller, or the like, for instruction, the content distributing apparatus 21 distributes the print content to the STB 100 based on a downloading request made by the STB 100.

Having downloaded the print content to the STB 100, the user issues a print instruction to the STB 100 using a remote controller or the like when he or she desires to print after looking at the title of the print content, or the like (S4). In this way, the print content downloaded to the STB 100 is transmitted to the printer 200 (S5) and outputted by the printer for printing (S6). Here, the STB 100 temporarily stores, in the internal memory or the like, the point value attached to the print content that is outputted to the printer 200.

It should be noted that in the case where the user issues a print instruction while viewing the digital program with the display indicating that the print content can be outputted for printing, the current print content may be downloaded to the STB 100 from the content distributing apparatus 21 based on the link information included in the program, and then, automatically transmitted to the printer 200 to be outputted for printing.

When downloading the print content, the STB may display, on the TV screen or the like, not only the title or the like, but also the point value attached to the print content. In this case, the user can determine whether or not to issue a print instruction considering the value of the point attached to the print content.

When the printer 200 finishes printing and informs the STB 100 of the completion (S7), the STB 100 accumulates the point value which have been temporarily stored to the point value accumulated so far (S8). Thus, by the completion of the output, the accumulated point value increases by the point value attached to the print content.

It should be noted that in the case where the instruction to repeatedly output the same print content or the instruction to output the same print content on plural print sheets is issued, the printer 200 informs the STB 100 that the printing in accordance with plural outputs is completed, and the STB 100 repeats accumulating point values for the number of printing times (S4-S8).

FIG. 4 is a sequence diagram showing the flows of the information and cash relating to the order of printer consumables placed by the user under the print content distribution system 1 shown in FIG. 1.

The printer 200 monitors the remaining amount of the consumable in the printer itself (S10). When detecting that the consumable runs out, the printer 200 notifies the STB of it together with the information relating to the printer (i.e., device information) (S11). The STB 100, having being notified of it, obtains a confirmation from the user on the method of payment and the ordering conditions on whether or not to use the accumulated points, and the like, by communicating with the user via the screen of the TV receiver or the like (S12), and transmits the ordering information indicating an order for consumables to the content distributing apparatus 21 (S13). It should be noted that in the case where the user issues an instruction for ordering the consumables using the accumulated points, the STB 100 subtracts the point values for the used amount from the point values accumulated so far. The ordering information includes not only the model number and quantity of the consumables but also the ordering conditions specified by the user, the accumulated point value, the user information (i.e., membership information), and the like.

The content distributing apparatus 21, having received the ordering information, notifies of the amount of cash equivalent to the point value indicated by the point data included in the ordering information (S14). The content providers 10a and 10b pay the content distribution company 20 for the charges requested (S15). In this way, the cash equivalent to the point value accumulated by printing the print content is paid for by the content providers 10a and 10b as a compensation for the printing of the print content performed by the user, that is, a compensation for the effects of advertisement exerted by printing the print content.

The content distributing apparatus 21 of the content distribution company 20, having gained the cash equivalent to the point value, performs the processing of restoring the points, namely, the processing of subtracting the cash equivalent to the point value (i.e., the cash received from the content providers 10a and 10b) from the normal price of the consumable (S16), and then, notifies the STB 100 of the charge for the price after the reduction (S18). The user pays the content distribution company 20 for the price, that is, the sum reduced for the point value, after having confirmed the invoice received by the STB 100 on the TV screen or the like (S20).

It should be noted that the content distributing apparatus 21 may present to the user the sum before and after the reduction takes place at the time of purchase by the user, instead of presenting to the user the sum after the reduction after having placed the order for the consumable. Thus, the user is encouraged to purchase the consumable (use the points) because it is possible to inform the user of the exact amount of reduction before the order for the consumable is placed. The notification of the invoice transmitted from the content distribution company 20 to the user 60 is not limited to the means of computer communication, and it may be sent by mail.

The content distributing apparatus 21 of the content distribution company 20, having thus received the payment from the content providers 10a, 10b and the user 60, performs processing of settlement for ordering the consumable at the sum equivalent to the total amount of the payment (i.e., at normal price) (S21), and then, transmits the ordering information and user information to the printer maker 30a or 30b and the printer maker host apparatus 31a (S22).

It should be noted that the user information is information for identifying the user 60 who uses the STB 100. The information can be, for example, identification information assigned specifically to the STB 100 that is used for ordering, an ID number which is assigned uniquely to the IC card, and downloaded from the IC card used exclusively for charging, which is mounted on the STB 100, the membership information corresponding to the identification information of the STB 100 used for ordering, and the like, out of the membership information held by the content distributing apparatus 21.

The printer maker 30a or 30b, having received the order for the consumable, verifies the user based on the user information transmitted and performs processing of settlement (S23), charges the content distribution company 20 for the price of the consumable (S24) and receives the payment (S25).

The printer maker 30a or 30b, having received the payment, send, to the distributor terminal 41, the ordering information and the user information received from the content distributing apparatus 21 by use of the printer maker host apparatus 31a (S26), and pays the distributor 40 for the charges of selling the consumables (S27). Here, in the case where the target consumable is stored in the store room or the like, the printer maker 30a or 30b takes a consumable out of storage and controls the distribution 50 so that the consumable reaches to the distributor 40.

The distributor 40, having received the selling charges, delivers, in accordance with the ordering information and the user information sent from the printer maker host apparatus 31a, the consumable to the user who has placed the order (S28). Thus, the user can get a consumable to replace the one that runs out.

In this way, the user can obtain a point value by using the printer 200 to print the print content that is downloaded by the STB 100 from the content providing apparatus 11a via the content distributing apparatus 21, and store the obtained point value in the STB 100. When placing an order for a consumable, the user can get the reduction, by using the points accumulated so far, for the amount equivalent to the accumulated point values, and purchase the consumable at a price lower than the normal price. Therefore, the cost of printing a print content per sheet decreases and the user's financial burden is reduced, so that the user can print without minding the expenses involved in printing. It should be noted that the reduction for the point value that the user has received is paid by the content providers 10a and 10b while the content providers 10a and 10b can balance out the burden imposed for the points by providing the user with the print content which has advertising effects of stimulating the user to buy.

It should be noted that, in the present diagram, the content distributing apparatus 21 transmits the ordering information and user information to the printer maker host apparatus 31a in order to place the order for a consumable received from the user. The information, however, may be sent directly to the distributor terminal 41 (S30) as shown in the sequence diagram in FIG. 5. After the payment is made by the content distribution company 20 to the distributor 40 (S32, S33), it may be the distributor 40 who verifies the state of the storage for the consumables (S34), requests the printer maker 30a or 30b to take out a consumable out of storage in order to obtain it (S35-S37), and delivers the obtained consumable to the user 60 who has placed the order (S40) after the payment (S38, S39).

It is needless to say that the procedure used for ordering and charging processing is not restricted to the one shown in FIGs 4 and 5, and each procedure may be switched. For example, the content distribution company 20 places the order for the consumable to the printer maker 30a or 30b (S22) after having charged the content providers 10a and 10b for the points they owe (S14), however, the content distribution company 20 may charge the content providers 10a and 10b after having placed the order for the consumable to the printer maker 30a or 30b.

FIG. 6 is a block diagram showing in detail the structure of the STB 100. The STB 100 is a digital broadcast receiver equipped with a function to manage the point value corresponding to the print content received from the content distributing apparatus 21. The STB is composed of a data broadcast receiving unit 101, an HDD 102, a communication I/F unit 103, a display unit 104, a browser 105, a control unit 106, a printer I/F unit 107, a remote control receiving unit 108, a point accumulation unit 109 and an IC card I/F unit 110.

The data broadcast receiving unit 101 receives, based on the user's operation of tuning in on a station, or the like, the program content transmitted from the broadcast station via data broadcast, and stores it in the HDD 102 or transmits to the browser 105. It should be noted that the program content may include the link information (a Uniform Resource Locator (URL) of the Hyper-Text Transfer Protocol (HTTP) or the like) for linking to the content distributing apparatus 21 where the print content is kept. The HDD 102 may be a hard disk, or the like, for accumulating the program content transmitted from the data broadcast receiving unit 101.

The communication I/F unit 103 is a phone modem, or the like, for communicating bi-directionally with the content distributing apparatus 21 via a communication network, and is used for downloading, from the content distributing apparatus 21, the print content with a point value, on-line ordering consumables placed by the STB 100 and transmitting the maintenance information directed to the printer maker 30a or 30b, and the like.

The display unit 104 is composed of a display control circuit for generating a video signal, a TV receiver, and the like. The browser 105 is a Graphical User Interface (GUI), or the like, which analyzes the data broadcast content described in the BML or the like, and is received by the data broadcast receiving unit 101, so as to expand it into an image and allow the display unit 104 to display it or communicates with the user, based on the instruction from the control unit 106, for the purposes such as printing and ordering of consumables via the display unit 104 or the remote controller 120.

The control unit 106 is composed of an ROM in which a dedicated program is stored, a CPU, and the like, and has three main functions: an ordering control unit 106a for performing processing related to the ordering of printer consumables; a job management unit 106b for controlling output of print contents to the printer 200; and a maintenance control unit 106c for performing processing related to the maintenance of the printer 200.

The printer I/F unit 107 is an interface or the like, for the USB or the IEEE1394 bus for connecting the STB 100 and the printer 200. The remote control receiving unit 108 receives an infrared signal from the remote controller 120 and outputs the signal data to the control unit 106. The point accumulation unit 109 is a non-volatile memory or the like, for storing the point table 109a indicating accumulated points for each of the content providers 10a and 10b.

The IC card I/F unit 110 is a reader/writer for IC cards or the like, and reads/writes data from and to the IC card 130 for charging which complies with a Conditional Access System (CAS) in digital broadcast. It should be noted that the IC card 130 stores specific identification information (card ID) and viewing history information in the internal memory, and has a circuit for keeping the information secure, or the like. When the IC card 130 is mounted on the STB 100, the card ID is transmitted to the STB 100 and is used as the user of the STB 100, that is, the user information for identifying the user 60. In the present embodiment, the user information is used not only as the information for identifying the viewer of paid programs but also as the information for identifying the user 60 who uses the STB 100 and the printer 200. To be more precise, the user information is used as the information for identifying an orderer in the case of ordering the consumables for the printer 200 or the information for identifying a demander in the case of demanding the maintenance of the printer 200.

FIG. 8 is a block diagram showing in detail the structure of the printer 200. The printer 200 generates device information including the information useful for the maintenances on the consumables and the printer itself. The printer 200 is a printer based on a color ink jet method having a function to notify the STB 100, or the like, and is composed of a device information generation unit 210, a communication unit 220, a job control unit 221, an interpreter rasterizer 222, a printer engine 223 and a print completion detecting unit 224.

The communication unit 220 is an USB, an IEEE1394 bus interface, or the like, for connecting the printer 200 and the STB 100. The job control unit 221 performs spooling on the print data transmitted from the STB 100, transfers it to the interpreter rasterizer 222 in units of jobs and sends back, to the STB 100 via the communication unit 220, the status information indicating the print result informed of by the print completion detecting unit 224. It should be noted that the status information includes at least the information indicating whether or not the printing is completed properly. Here, "completed properly" means that the print job is completed without errors neither in the job control unit 221, the interpreter rasterizer 222 nor the print completion detecting unit 224, detected by the print completion detecting unit 224. For example, in the case of printing a print job on five pages, it means that the printing on the five pages using a specified ink is completed and all the five sheets are printed out.

The interpreter rasterizer 222 analyzes the print data from the job control unit 221 and performs rasterizing after the font expansion or the like. The printer engine 223 is a print engine for printing the rasterized data on the print sheet and is equipped with the consumables 223a-223c such as a color ink.

The print completion detecting unit 224 verifies whether or not the print data received by the communication unit 220 is printed out as requested, by supervising the processing performed by the interpreter rasterizer 222 and the printer engine 223, and notifies the job control unit 221 of the status information including the information on how and to which extent the printing is executed.

The device information generation unit 210 is a processing unit for generating the device information 230 as shown in FIG. 9 and transmitting to the STB 100 via the communication unit 220, and is composed of a specific information storing unit 211, a combining unit 212, a refilling judging unit 213, consumable detecting units 214a-214c and an execution status monitoring unit 215.

The consumable detecting units 214a-214c are sensors, or the like, for detecting the remaining amount of each of the consumables 223a-223c such as an ink. The refilling judging unit 213 judges whether each of the consumables 223a-223c is in the state of "consumable run out" by comparing the remaining amount of respective consumable informed by each of the consumable detecting units 214a-214c and the predetermined threshold memorized inside (e.g., a value indicating 10 % of the full amount), and informs the combining unit 212 of the result and the remaining amount for each of the consumables 223a-223c.

The specific information storing unit 211 is a memory, or the like, for holding beforehand the specific information of the printer 200 (e.g., "maker", "type", "model number" and "serial number"). The execution status monitoring unit 215 has a calendar/timer function and holds maintenance information such as accumulated time of power distribution, a moving distance of a print head, a total amount of sheets printed, date and type of the print errors occurred in the past and a total value indicating the number of times for each error type, by monitoring the operation, the power and the like of the printer engine 223, and holding the obtained data after having accumulated it. Moreover, jam information indicating the occurrence of paper jam may be included in the maintenance information for handling the errors.

When receiving the request indicating the desire to obtain the device information from the STB 100 via the communication unit 220 or the notification that the consumable runs out from the refilling judging unit 213, the combining unit 212 generates the device information described in the BML as shown in FIG. 9 by performing the following: reading out the specific information from the specific information storing unit 211 and the maintenance information from the execution status monitoring unit 215; receiving, from the refilling judging unit 213, the remaining amount of the consumables 223a~223c and the information indicating whether or not each of the consumables runs out; and writing the specific information, consumable information and maintenance information into the template data which is described in the BML and held inside in advance, so as to generate the device information described in the BML as indicated in FIG. 9. The combining unit 212 sends the device information to the STB 100 via the communication unit 220.

As shown in FIG. 9, the device information 230 generated by the combining unit 212 is made up of a specific information 231, a consumable information 232, and a maintenance information 233 while the maintenance information 233 is further made up of an error information 233a and an execution status history information 233b. Among such information, fixed information such as specific information and model numbers of consumables is already kept in the combining unit 212 as a template included in the BML data. More precisely, in the case of the consumable information, the template for which a tag and an element are defined as in the "<SERVICE>consumable<SERVICE>" may be prepared beforehand so that the BML data is completed by writing the value indicating the state at that time in such tag. It should be noted that the tags are to be scripted, and are analyzed.

The STB 100 receives such device information 230 from the printer 200, and automatically places an order for consumables by transmitting, to the content distributing apparatus 21, the consumable information 232 and the specific information 231 included in the device information 230, together with the user information, or automatically requests for maintenance by notifying the printer maker host apparatus 31a of the maintenance information 233 and the specific information 231, together with the user information, via the content distributing apparatus 21. Thus, the user can order necessary consumables before the consumables completely run out or the user can receive exact maintenance services from the printer maker 30a or 30b.

It should be noted that the specific information 231 transmitted to the content distributing apparatus 21 and the printer maker host apparatus 31a is used for a search of the corresponding consumable, a unit (assigned per printer) for accumulating points, and the like.

The following describes the characteristic operation in the print content distribution system 1 configured as described above.

FIG. 10 is a flowchart showing the operation of accumulating points performed by the STB 100. The browser 105 of the STB 100 reads out either the print content with a point value received via the communication I/F unit 103, or the print content with a point value stored in the HDD 102 via the control unit 106, and displays it on the TV screen as shown by the screen display example 65 in FIG. 11 (S50).

Here, when the user issues a print instruction by pressing the print buttons 65a-65d on the display screen 65 using the remote controller 120 or the like (S51), the job management unit 106b specifies a target print content, temporarily keeps the point value assigned to the print content, and at the same time, outputs the print content to the printer 200 via the printer I/F unit 107 (S52). It should be noted that in the case where the user does not issue a print instruction (No in S51), neither printing nor point accumulation is performed.

The print content transmitted to the printer 200 is spooled by the job control unit 221 via the communication unit 220, and then, rasterized by the interpreter rasterizer 222 and printed on a print sheet by the printer engine 223. The operation at each of the processing units 221-223 is detected by the print completion detecting unit 224, and the printer 200 notifies the STB 100 of the status information indicating the result.

The job management unit 106b in the STB 100, having received the status information from the printer 200, judges whether or not the detail of the information indicates completion of printing. In the case where the information indicates completion of printing (Yes in S53), the job management unit 106b reads out the accumulated point value at that time from the point accumulation unit 109, adds the point value which is temporarily kept to the accumulated point value and stores the result by writing it onto the point accumulation unit 109 (S54).

It should be noted that, in the addition of points, the job management unit 106b considers the conditions for printing, adjusts the point value to be accumulated, and then, accumulates it to the point value stored in the point accumulation unit 109. To be more concrete, the job management unit 106b accumulates the point value after the adjustment such as multiplying the attached point value by a constant depending on the following: number and size of print sheets; whether one-side printing or two-side printing; the page number to be printed on a sheet; a quality of printing; whether color printing or monochrome printing; and the like.

For example, the point value attached to the print content is treated as an additional value per sheet in the case of monochrome printing on an A4 sized sheet, and the job management unit 106b keeps beforehand coefficients according to each print condition. For example, 1.5 for the case of outputting on a B4 sized sheet, 2.0 for the case of outputting on an A3 sized sheet, and 3.0 for the case of color printing, and the like. When receiving the notification that the printing is completed from the printer 200, the job management unit 106b calculates the additional point value based on the coefficient and the number of pages. For instance, in the case where the print content with which the point value "2" is associated is printed in color on three B4 sized sheets, "2" is multiplied by "1.5" based on the size B4, then by "3" based on the color printing, and then by "3" based on the number of printed sheets. Thus, the job management unit 106b calculates the additional point value "27" by the equation

$$2x1.5x3x3=27$$

and updates the point value by adding this value to the point value stored in the point accumulation unit 109.

When the print condition is specified as multiple printing at the time of sending a print instruction, the point value can be calculated by multiplying the point value calculated per sheet by the number of copies printed. More precisely, in the case where the accumulated point value is "27" as calculated above, since this value is the point per copy for the specified print condition, the point value "27" is multiplied by the number of copies that is requested. For example, in the case where printing of four copies is specified the additional point value "108" is calculated from "27 x 4=108". Thus, the accumulation of points is performed according to the actual amount of consuming the consumable.

In the case where the status information does not indicate completion of printing (No in S 53), the job management unit 106b deletes the temporarily stored point value and does not perform the accumulation.

Thus, the print content is printed by the printer 200 without fail and the point value is accumulated according to the condition of printing after the confirmation that the consumables 223a-223c are used.

FIGs 12 and 13 are flowcharts respectively showing an example of judging the completion of printing performed by the print completion detecting unit 224. FIG. 12 shows the flow in the case where the completion of printing is judged based on the number of printed sheets while FIG. 13 shows the flow in the case where the completion of printing is judged based on the number of rotations performed by a paper feed roller.

In the flow shown in FIG. 12, when the job control unit 221 in the printer 200 receives a print job (S60), the printer engine 223 starts printing the print data that has been through the interpreter rasterizer 222 (S61). The print completion detecting unit 224 then counts the number of sheets printed and forwarded by the printer engine 223 (S62). When the printing is completed, the print completion detecting unit 224 compares the actual number of printed sheets obtained by the counting and the specified number of sheets obtained from the job control unit 221. Only in the case where the numbers match (Yes in S63), the print completion detecting unit 224 judges that the printing is completed without errors, and generates the status information indicating it.

Similarly, in the flow shown in FIG. 13, when the printing is started (S65, S66), the print completion detecting unit 224 counts the number of rotations for the paper feed roller in the printer engine 223 (S67). When the printing is completed, the print completion detecting unit 224 compares the actual forwarded distance (paper feed distance) equivalent to the number of rotations obtained from the counting and the feed paper distance obtained based on the specified size and direction of the sheet obtained from the job control unit 221. Only in the case of conformity within a predetermined range (Yes in S68), the print completion detecting unit 224 judges that the printing is completed without errors and generates the status information indicating it.

FIGs 14 and 15 are communication sequence diagrams respectively showing an example of the procedure and timing to get the device information 230 from the printer 200. Here, the diagram shows how the message of "consumable run out" occurred in the printer 200 is transmitted from the printer 200 to the STB 100. Fig. 14 shows a sequence example by means of polling while FIG. 15 shows a sequence example using a voluntary notification sent from the printer 200.

In the polling method shown in FIG. 14, the control unit 106 in the STB 100, for example, repeats inquiring the printer 200 in a regular cycle. In the case where the combining unit 212 in the printer 200 does not receive notification of "consumable run out" from the refilling judging unit 213, the combining unit 212 does not respond. In the case of receiving the notification, the combining unit 212 generates the BML data including the consumable information 232 indicating that a consumable runs out, and sends the data back to the STB 100.

In the method of voluntary notification shown in FIG. 15, the control unit 106 in the STB 100 notifies beforehand the printer 200 of the instruction requesting a voluntary notification when a consumable runs out, and awaits the notification from the printer 200 thereafter. When receiving the notification of "consumable run out" from the refilling judging 213, the combining unit 212 in the printer 200, having received the instruction, generates the BML data including the consumable information 232 indicating that the consumable runs out, and sends the data back to the STB 100.

In this way, when the control unit 106 in the STB 100 is notified of the "consumable run out" occurred in the printer 200, the ordering control unit 106a activates the browser 105 and allow the browser 105 to display an ordering menu or the like together with the BML data received from the printer 200. The ordering control unit 106a obtains, from the user, the instruction for ordering consumables, or the like, by use of accumulated point value, generates the ordering information indicating it, and transmits the information to the content distributing apparatus 21 via the communication I/F unit 103. In the case where the ordering condition is already set, the ordering control unit 106a automatically transmits the ordering information to the content distributing apparatus 21 without obtaining a confirmation from the user, each time the notification of "consumable run out" is received.

It should be noted that the timing to detect the remaining amount of the consumables may be set for each printing. For example, the STB 100 may receive the information on the states of consumables from the printer 200 at the time of printing, and process based on the result of comparing the information and the thresholds.

FIG. 16 is a flowchart showing the procedure used for detecting "consumable run out" occurred in the printer. The refilling judging unit 213 in the printer 200 obtains, from the consumable detecting units 214a-214c, the information on the remaining amount of the consumables 223a-223c (S70), and judges whether or not at least one of the consumables 223a-223c has a remaining amount that indicates a predetermined threshold and below (S71). In the case where one of the consumables 223a-223c is found as such (Yes in S71), the refilling judging unit 213 notifies the combining unit 212 that the state of "consumable run out" is occurred (S72). Thus, the combining unit 212, having received the notification, generates the device information 230 including the consumable information 232 indicating that a consumable runs out, and transmits the device information 230 to the STB 100.

FIG. 17 is a flowchart showing the procedure used by the STB 100 for ordering consumables. In the case of receiving, from the printer 200, the notification that the state of "consumable run out" is occurred or receiving the user's instruction for ordering consumables, the ordering control unit 106a in the STB 100 displays on the TV screen, by sending an instruction to the browser 105, the ordering menu 70 made up of customer information 71, device specific information 72, order detail information 73 and point/other information, as shown in FIG. 18 (S81). The ordering control unit 106a performs inputs or makes changes to each item in the ordering menu by communicating with the user via the browser 105, the remote controller 120, the remote control receiving unit 108, and the like (82).

Here, when the "ordering" button 75 on the screen is pressed, the ordering control unit 106a verifies the user's instruction on whether or not to use the accumulated point (S84). In the case where the instruction indicates the use of the accumulated points, the ordering control unit 106a orders a consumable by transmitting, to the content distributing apparatus 21, the ordering information indicating the detail of the input that has just been inputted, the user information and the point value accumulated in the point accumulation unit 109 (S85). Thus, the user can purchase a consumable with the price reduced for the sum equivalent to the used points.

It should be noted that in the case where the points are used at the time of ordering, the point value stored in the point accumulation unit 109 is updated by subtracting the points that are used (not necessarily all). For example, in the case of using a total of 650 points when "620" points are accumulated in the point accumulation unit 109 for the provider A and "35" points for the provider B, the remaining point is "0" for the provider A while "5" points remains for the provider B.

In the case where the instruction does not indicate the use of points, the ordering control unit 106a orders a consumable by transmitting, to the content distributing apparatus 21, the ordering information indicating the detail of the input that has just been inputted and the user information (S86). In this case, the user purchases a consumable at a normal price without using points.

For example, in the case where the user uses the "620" points accumulated for the provider A and the "30" points accumulated for the provider B, and in addition, orders a consumable that costs 3000 yen, it is assumed that one point is an equivalent of one yen so that the content distribution company 20 having received the order (i.e., content distributing apparatus 21) charges as follows: the content provider A 10a for a payment of 620 yen; the content provider B10b for a payment of 30 yen; and the user 60 for the price with a reduction of these points, namely, 2350 (=3000-620-30) yen.

FIG. 19 is an example of the display on the TV screen of the maintenance information 80 performed by the maintenance control unit 106c in the STB 100. The maintenance control unit 106c obtains the device information 230 from the printer 200 based on the user's instruction or receives the device information 230 notified of by the printer 200 with the occurrence of an error as a trigger, and sends the maintenance information 233 and others included in the device information 230 to the browser 105 so as to allow the display unit 104 to display the device information 230.

As shown in the diagram, the screen 80 displaying the maintenance information is a display of the device specific information 81, an error statistics 82, an error log 83 and an execution history 84. They are the specific information 231 and the maintenance information 233 of the device information 230 transmitted from the printer 200 which are displayed on the TV screen.

It should be noted that a send mode 85 has the two following modes: "manual" for sending the user information as well as the maintenance information and the specific information to the printer maker 30a or 30b in the case where there is an instruction from the user; and "automatic" for automatically sending the user information as well as the maintenance information and the specific information to the printer maker 30a or 30b under predetermined conditions without user's instructions.

That is to say, in the case where the user sets the send mode as "manual" using the remote controller 120 or the like, the maintenance control unit 106c sends the maintenance information and the specific information which are displayed on the TV screen, together with the user information, to the printer maker 30a or 30b via the content distributing apparatus 21. In the case where "automatic" is set, the maintenance control unit 106c automatically sends the maintenance information and the specific information together with the user information, to the printer maker 30a or 30b via the content distributing apparatus 21 for one of the following cases: 1) where the device information 230 including the maintenance information 233 is sent to the STB 100 when the error occurs in the printer 200 or on the similar occasion; or 2) where the number of errors, or the like, is monitored by the obtainment of the device information 230 from the printer 200 and the number surpasses a predetermined number, or in the similar case.

It should be noted that the user information can be, for instance, the card ID of the IC card 130 transmitted from the IC card 130 inserted into the STB 100, or the like.

Thus, the printer maker 30a or 30b, having received the maintenance information and others, can, for example, performs maintenance such that provided by a service man visiting the user to fix the printer 200, according to the maintenance information. Namely, the printer maker 30a or 30b can identify a demander of the maintenance, based on the received user information, and also identify a printer 200 that receives maintenance based on the received specific information, and acknowledge the error occurred in the printer 200, and the like, based on the received maintenance information.

As described above, with the print content distribution system according to the present invention, the user can gain a point value by printing the print content provided by the content providers 10a, 10b, and also receive a discount by using the points accumulated until the purchase of a consumable. Thus, the user's financial cost involved in printing is reduced and the user is encouraged to print contents. As a result, the demand for consumables increases while the price decreases, by which the market for printer consumables is activated.

Thus, the print content distribution system according to the present invention is described based on the embodiment, however, the present invention is not restricted to the present embodiment.

For example, it is explained that the device information 230 transmitted from the printer 200 to the STB 100 is described in BML and includes the consumable information 232 that indicates in detail the model number and the remaining amount of the consumables and presence/absence of the state of "consumable run out", and others, but it may be a simple response packet 90 as shown in FIG. 20A. It should be noted that head type information is included in the generated consumable information. The response packet 90 shown in FIG. 20A is composed of the following: a byte of field 90a indicating a type of events which occur in the printer 200; a byte of field 90b indicating a type of character code for a message that follows (including a type of display format for the message); a byte of field 90c indicating the length of the message; and a variable length field 90d for storing the message. The STB 100, having received such response packet 90, judges the type of event such as "run out of ink" based on the bit value included in the head field 90a, identifies the character code used for the character string stored in the character string field 90d based on the character code field 90b and identifies the length of the character string of the character string field 90d using the text length field 90c. Based on such information, it is possible to display the TV screen as shown in FIG. 20B by just displaying the message included in the character string field 90d without judging what is written in the message.

It should be noted that it is possible to switch the format of display according to the event type field 90a in the response packet 90 and the display on the TV screen shown in FIG. 20B can be performed by a viewer that can display the text instead of a BML browser. More precisely, a BML browser having an advanced function such as XML text analysis and display layout is required to display BML data. The display of the response packet 90, however, does not require these advanced functions and only needs a display function having the same level as that of the text viewer. By thus using text data, the system for presenting the information held by the printer to the user can be realized using a simple text viewer.

It should be noted that it is possible to send various information in text format using the message field in the response packet 90, however, it is particularly effective in the case of sending information having the following characteristics:

- information for achieving an object just by presenting it to the user
- information that depends on a printer model

FIG. 20 shows an example of the information having the two characteristics as mentioned above. In FIG. 20B, a message that encourages the user to change the magenta color cartridge is displayed. In FIG. 20B, the change of the magenta color cartridge is necessary, and, in general, the user changes a cartridge manually. In this case, the object is achieved if the user is successfully urged to change the magenta color cartridge.

The type of ink cartridges depends on a printer model. The ink type can be varied from four to six colors. The text stored in the printer 200 is sent back to the STB 100 according to the circumstances, and the STB 100 only needs to display it. The STB 100 therefore does not need to have a system to absorb the difference in printer models.

It should be noted that in the case of applying the conventional method employed by a personal computer or the like to the STB, it is the printer that notifies the STB of an event using an event type field so that the STB displays the character string data stored inside depending on the type of events. When the type of printers or software version is changed and a new event is added, this method requires an additional definition for the event type field, and accordingly, an additional character string data to be stored in the STB and an additional change to be made in the STB. Consequently, the advantage of the method according to the present invention over the conventional method is apparent.

By thus using text data, the system for presenting the information on the printer to the user can be realized using a simple text viewer. It should be noted that in the present embodiment, the TV simultaneously displays a text and an event type, but only a text may be displayed.

The message to be stored in the character string field 90d is not restricted to such message relating to consumables. For example, in the case where the printer 200 updates a firmware such as a control program installed in the printer, a message indicating a completion of the update such as "The update of firmware is completed" may be stored. In this way, it is possible to inform, via the STB 100, the user of completion of various processing performed by the printer 200.

In the present embodiment, the print content with a point value is provided from the content distributing apparatus 21 to the STB 100 via a communication network. Nevertheless, the present invention is not restricted to such method of providing a print content. For example, a digital program content may include a print content and may be directly stored off-line into the HDD 102 of the STB 100 via a storage medium such as a CD-ROM and a memory card.

Similarly, the same service as described in the present embodiment, that is, a discount service for consumables with the use of points, or the like, can be realized by allowing a storage medium to directly input a print content to the printer 200 and the printer 200 to accumulate points, generate BML data based on the result, and transmit the BML data to the STB 100.

In the present embodiment, the judgment on whether or not refilling of consumables is required (i.e., an occurrence of "consumable run out") is made by the printer 200, but it may be the STB 100 instead. For example, the printer 200 may notify the STB 100 only of the data indicating a remaining amount or states of consumables 223a-223c while the STB may detect an occurrence of "consumable run out" by comparing the notified remaining amount and state with the predetermined thresholds (e.g., a value equivalent to 10 % of a full amount).

Similarly, the accumulation of the point value attached to the print content may be performed not only by the STB 100, but also by the printer 200 or another external apparatus. For example, in the case where the printer 200 accumulates points, the STB 100 outputs directly a print content with a point value to the printer 200. The printer 200, having received the print content, calculates an additional point value according to the print mode (e.g., the number of pages to be printed, a size of sheets, color/monochrome printing, and others) at that time, after the printing is completed, and accumulates the calculated point value to the point value stored in the memory or the like. The printer 200 then may send back to the STB 100 the point value stored in the memory or the like in response to the inquiry made on the accumulated point value by the STB 100. Thus, the same processing of accumulating points as performed by the STB 100 (e.g., ordering a consumable using points) can be realized.

In the case where an external apparatus accumulates points, the STB 100 directly outputs a print content to the printer 200 regardless of whether or not a point value is attached. The printer 200, having received the print content, may obtain calculation conditions according to the print mode (e.g., the number of pages to be printed, a size of sheets, color/monochrome printing, and others) at that time, after the printing is completed. The printer 200 then may send back, to the STB 100, the calculation conditions together with the notification that the printing is completed. The STB 100 may further send back, to the external apparatus, the calculation conditions together with the notification that the printing is completed. When distributing the print content to the STB 100, the external apparatus temporarily stores beforehand the point value attached to the print content, receives from the STB 100 the notification that the printing is completed as well as the calculation conditions, and then, performs accumulation processing after recalculating the point value.

It should be noted that the external apparatus may be a dedicated server, the content distributing apparatus 21 or the content providing apparatus 11a. Thus, the same processing of accumulating points as performed by the STB 100 (e.g., ordering consumables by use of points) can be realized.

In the present embodiment, it is explained that the log information, such as date/time and type of the errors occurred in the printing performed by the printer 200, is recorded and accumulated by the execution status monitoring unit 215 in the printer 200, but such information may be recorded and accumulated by the STB 100. That is to say that the STB 100 may obtain the information indicating the occurrence of an error, or the like, identify the date/time when the errors occurred based on a timer installed in the STB 100 or the like, and record it in the memory so as to accumulate it.

More concretely, the time when an error occurred in the printer 200 is attached as a log using the calendar/timer function. Here, an event can be an error occurred in the printer 200, an execution history, or a consumption history of consumables or the like. Two cases are conceivable for a method of attaching time: the printer 200 attaches it; or the STB 100 attaches it.

In the case where the printer 200 attaches time, a timer circuit capable of judging an absolute time can be installed in the printer 200 as shown in FIG. 21A so that the time can be obtained from this timer circuit at the time when an event occurs. Another example is to install, in the printer 200, an internal timer circuit by which a relative time can be obtained, instead of the timer circuit for obtaining an absolute time. Thus, the printer 200 receives, from the STB 100, the data of the absolute time either when an initial power is turned on or when the print data is received, and obtains the time from the internal timer circuit based on the received absolute time data. In the case where the absolute time indicates 14:00, 18/03/2001 whereas the relative time indicates 2:30, the time 16:30, 18/03/2001 is counted. It should be noted that the absolute time data transmitted from the STB 100 may be transmitted exclusively to the printer or may be inserted into the header information attached to the print data.

In the case where the STB 100 attaches time, the printer immediately sends failure notification information to the STB 100 when an event such as an error occurs in the printer 200, so that the STB 100 receives the failure notification. The STB 100 refers to the absolute time since it normally incorporates the circuit that can judge the absolute time. It is therefore possible for the STB 100 to directly attach the time to the failure notification information at the timing to receive the failure notification information form the printer 200 without almost any time lag. The following processing may be repeated: the failure notification information with the time thus indicated is returned back to the printer, and the time is recorded at the time when an event occurs for the next time. The printer 200 may notify the STB 100 only of the failure information while the STB 100 may manage the time (i.e., log) and the failure information by means of accumulation.

In the present embodiment, the point information 74 in the ordering menu 70 displays a total accumulated points for each of the content providers 10a and 10b (present accumulated points), as shown in FIG. 18, but it may display what is indicated in the point table 109a shown in FIG. 7, namely, the accumulated points separately indicated for each of the content providers 10a and 10b. The user may select the point value to be used at the purchase of consumables among the accumulated points separately displayed for each of the content providers 10a and 10b, and order consumables by using only a part of the points.

In the present embodiment, the STB 100 receives the print completion notification from the printer 200 after having outputted the print content to the printer 200, and then, performs the accumulation of the point value attached to the print content. However, even in the case where the printing is not completed properly due to a paper jam or the like, the STB 100 may perform point calculation according to the number of printed pages by receiving from the printer the report on how many pages are printed so far. In order to simplify the confirmation of the completion, the pressing of the print button after the confirmation that the printer is connected may be regarded as the completion notification as described above.

The counting of points may be performed not only by the side of the user 60 (STB 100) but also by an external apparatus, for instance, the content distributing apparatus 21. To be more concrete, each time the STB 100 receives the print completion notification from the printer 200 or each time a predetermined amount of point value is accumulated in the STB 100 or each time a predetermined mount of time passes, the STB 100 uploads the point value obtained for the printing completion or the point value accumulated so far into the content distributing apparatus 21 so that the distributing apparatus 21 manages the accumulated point value for each user. The user who desires to be informed of the accumulated point value may download the accumulated point value placed in the content distributing apparatus 21 and confirm it on the TV screen or the like by gaining an access to the content distributing apparatus 21 via the STB 100.

In the present embodiment, a print content with a point value, provided by the respective different content providers 10a and 10b, is provided to the user 60 after being collected by the content distributing apparatus 21 (i.e., via the content distributing apparatus 21). Each of the content providers 10a and 10b may, however, provide the user 60 with the print content directly and respectively. That is to say, the content providers 10a and 10b may respectively have a function of the content distributing apparatus 21.

More in detail, in the case where the content providing apparatus, the content distributing apparatus, and the apparatus set on the side of the maker are independent from one another and content makers can separately transmit content to each user, the final processing in charging may be performed by the side of the content distributing apparatus (i.e., a content distribution company) who may charge the maker and the content maker (e.g., a content providing apparatus, an apparatus on the side of the maker and the like). In the case of separately transmitting the content, the issue of guarantee for charging, namely, whether or not the price of consumables displayed on the TV is going to be actually charged is uncertain, while in the case where print contents are collected for transmission, it is probable that the charging, in a sense, is or can be guaranteed by the party who collects (e.g., using an ID or the like). Three cases are conceivable for the content that is separately transmitted (the content that is not transmitted via the content distribution company): an inquiry is made on the content to the content distribution company so that the content can be printed after the presentation of the inquiry result; that the reduction cannot be guaranteed is displayed; and an inquiry is made on the content at the stage of actual ordering so that the amount that can be surely reduced is displayed before the ordering.

Similarly, the content providers 10a, 10b, and the printer makers 30a, 30b may be the same agent or the content distribution company 20 and the printer makers 30a, 30b may be the same agent. Moreover, a notification on the purchase of consumables from the STB 100 may be sent to the printer maker host apparatus 31a or the distributor terminal 41, instead of the content distributing apparatus 21. This is because the printer maker 30a or 30b, having received the purchase notification including the instruction on the use of points, or the distributor 40, may charge the content providers 10a and 10b for the points.

In the present embodiment, the identification of the user 60 is performed based on the card ID held by the IC card 130. The authentication of the user, however, is not limited to the user authentication based on such CAS, and a simple user authentication performed by the content distribution company 20, for example, a method to identify a member using a combination of a user ID and a password may be employed.

In the present embodiment, the content which the user desires to print is specified in the screen display shown in FIG. 11. The STB 100 may, however, display a screen by associating the point value attached to the content to be printed with each of the contents. Thus, an amount of the reduction for the user in the case where each of the contents is printed is clearly indicated, and therefore, the user is encouraged to print more.

In the present embodiment, the job management unit 106b in the STB 100 handles the point value attached to the print content as an additional value per page in the case of monochrome printing on an A4 sized sheet, while the job management unit 106b stores in advance the coefficients in accordance with various print modes and calculates an additional point value based on the coefficient and the number of pages, when receiving, from the printer 200, the notification of print completion. The processing on points may be described beforehand, as a script, in the data broadcast content which is described in the BML or the like and received by the data broadcast receiving unit 101. In this case, the point value may be calculated based on the various print modes and printing conditions received from the job management unit 106b so that the calculated point value may be accumulated to the point value stored in the point accumulation unit 109 in the STB 100, as is the case of the present embodiment.

The calculation of points may be performed not only by the side of the user 60 (STB 100), but also by an external apparatus, e.g., the content distributing apparatus 21. More concretely, each time the STB 100 obtains the notification of print completion from the printer 200, the point value obtained for the print completion may be calculated based on the script described beforehand in the data broadcast content which is described in the BML or the like and received by the data broadcast receiving unit 101, and the obtained additional point value may be up-loaded to the content distributing apparatus 21 so that the content distributing apparatus 21 manage the accumulated point value for each user.

In the present embodiment, as shown in FIG. 8, the execution status monitoring unit 215 in the printer 200 equipped with a calendar/timer function monitors the operation, the power and the like of the printer engine 223, and stores, as maintenance information, an accumulated time of power distribution, a moving distance of a print head, a total amount of sheets printed, date/time of the print errors occurred in the past and a total value indicating the number of times for each error type, and the like, by keeping the obtained data after accumulating it. The maintenance information is not limited to such information relating to hardware and may be the version information of the firmware that controls each part of the printer 200.

More precisely, the combining unit 212 reads out the specific information from the specific information storing unit 211 when receiving, from the STB 100 via the communication unit 220, the request for obtaining the device information, or when receiving, from the refilling judging unit 213, the notification that the consumable runs out, and receives the remaining amount of the consumables 223a-223c as well as the information on whether or not one of the consumables runs out, and also, reads out from the execution status monitoring unit 215 the version information of the firmware as the maintenance information. The combining unit 212 generates version information of the firmware so that the version information of the firmware includes the device information described in the BML as shown in FIG. 9. Such version information can be generated by writing the specific information, the consumable information, and the version information of the firmware as the maintenance information, in the template data which is described in the BML and is kept inside beforehand. The combining unit 212 then notifies the STB 100 of the version information of the firmware via the communication unit 220. It should be noted that text data, instead of the BML, may be used for the notification of the version information of the firmware. The trigger of the notification may be performed periodically and spontaneously by the printer 200. The version information of the firmware may be notified to the STB 100 not necessarily by attaching the consumable information, but by attaching the specific information.

It should be noted that the version information of the firmware may be assigned for each group of execution files making up the firmware or may be assigned for each micro-computer that functions as hardware.

In the case of notifying the version information of the firmware, the version information of the firmware is added as a piece of the maintenance information 233 in the device information 230 generated by the combining 212 shown in FIG. 9, together with the error information 233a and the execution history information 233b.

The STB 100 receives such device information 230 from the printer 200, and requests for maintenance, by notifying via the content distributing apparatus 21, the printer maker host apparatus 31a of the specific information 231 and the maintenance information 233 included in the device information 230 (in this case, the notification is performed with the user information attached).

It should be noted that the user information is information for identifying the user 60 who uses the STB 100, and includes, for example, identification information specific to the STB 100 held by the STB 100 that has been used for ordering, an ID number specific to the IC card downloaded by the STB 100 from the charging IC card that is mounted on the STB 100, and membership information corresponding to the identification information of the STB 100 that has been used for ordering, or the like, within the membership information held by the content distributing apparatus 21.

For the subsequent processing, in the case where the printer maker host apparatus 31a, for instance, examines the received version information of the firmware and judges that the information needs to be updated to the latest version, the printer maker host apparatus 31a notifies the user 60 of it by e-mail, and describes an URL site and the like, within the version information, that is a location to which the new firmware is to be downloaded. The user 60 may update the firmware by downloading a new firmware to the printer 200 via the STB 100, after having connected to the URL site. In the case where the printer maker 30a or 30b examines the received version information of the firmware and judges that the firmware needs to be updated to the latest version, the printer maker 30a or 30b may notify the user 60 of it by sending a letter enclosing the storage medium on which a program of the new firmware is recorded so that the user can update the firmware. Thus, the user can receive the maintenance service suitable for the version of the firmware from the printer maker 30a or 30b.

## Industrial Applicability

As described above, the communication apparatus, the printing apparatus and the consumable's order receiving apparatus, according to the present invention, are useful for an ordering/provision system for printer consumables (e.g., an ink cartridge). In particular, the present invention is useful for the system of ordering printer consumables and provision management that is configured by an STB or a personal computer, utilizing a network such as the Internet.

## Claims

**1.** A communication apparatus that is used by being connected to a printing apparatus and a consumable's order receiving apparatus for receiving an order for a consumable used by the printing apparatus, the communication apparatus comprising:

a content obtaining unit operable to obtain a print content which a point value is associated;
a print control unit operable to i) output print data of the obtained print content so as to cause the printing apparatus to print said print data, and ii) accumulate the point value associated with the print content; and
an ordering unit operable to transmit, to the consumable's order receiving apparatus, a notification for ordering a consumable, together with the accumulated point value,

wherein the consumable's order receiving apparatus receives the order for the consumable from the communication apparatus, and performs charging processing of reducing a price of the consumable by an amount equivalent to the point value transmitted together with the order.

**2.** The communication apparatus according to Claim 1,

wherein the print control unit accumulates the point value after confirming that the printing performed by the printing apparatus is completed.

**3.** The communication apparatus according to Claim 2,

wherein the print control unit confirms that the printing performed by the printing apparatus is completed, by repeatedly performing, on the printing apparatus, polling of whether or not the printing is completed.

**4.** The communication apparatus according to Claim 2,

wherein the print control unit confirms that the printing performed by the printing apparatus is completed, by obtaining a voluntary notification from the printing apparatus indicating that the printing is completed.

**5.** The communication apparatus according to Claim 1,

wherein the ordering unit performs the transmission after detecting an occurrence of a state in which a consumable runs out, the state indicating that a remaining amount of the consumable goes below a predetermined amount.

**6.** The communication apparatus according to Claim 5,

wherein the ordering unit detects the occurrence of the state in which a consumable runs out, by receiving a notification from the printing apparatus indicating said occurrence.

**7.** The communication apparatus according to Claim 5,

wherein the ordering unit receives a notification from the printing apparatus indicating the remaining amount of the consumable, compares the remaining amount with the predetermined threshold, and detects the occurrence of the state in which a consumable runs out, in the case where the remaining amount goes below the threshold.

**8.** The communication apparatus according to Claim 5,

wherein the ordering unit includes

a display unit for displaying on a screen the occurrence of the state in which a consumable runs out, after detecting said occurrence.

**9.** The communication apparatus according to Claim 5,

wherein the ordering unit performs the transmission without obtaining an ordering instruction from an operator, after detecting the occurrence of the state in which a consumable runs out.

**10.** The communication apparatus according to Claim 1,

wherein the ordering unit performs the transmission after obtaining an ordering instruction from an operator.

**11.** The communication apparatus according to Claim 1,

wherein the ordering unit displays on a screen the point value accumulated by the print control unit, and performs the transmission after obtaining an operator's instruction indicating a use of the point value.

**12.** The communication apparatus according to Claim 1,

wherein the print control unit displays on a screen the point value associated with the print content obtained by the content obtaining unit, outputs the print data of the print content so as to cause the printing apparatus to print said print data, in the case of obtaining an operator's print instruction in response to the display.

**13.** The communication apparatus according to Claim 11,

wherein the content obtaining unit obtains the print content from a plurality of providers,

the print control unit accumulates the point value for each of the providers, and

the ordering unit displays on a screen the point value accumulated for each of the providers.

**14.** The communication apparatus according to Claim 11, further comprising

a consumable information obtaining unit operable to obtain, from the printing apparatus, consumable information for identifying a used amount of the consumable,

wherein the ordering unit displays the obtained consumable information together with the point value.

**15.** The communication apparatus according to Claim 14,

wherein the consumable information obtaining unit further obtains device specific information held by the printing apparatus for identifying the consumable, in addition to the consumable information, and

the ordering unit further displays on the screen the obtained device specific information together with the point value.

**16.** The communication apparatus according to Claim 15,

wherein the device specific information includes at least one of a maker's name, a model number and a serial number of the printing apparatus, and a corresponding model number of a consumable.

**17.** The communication apparatus according to Claim 1,

wherein the print control unit adjusts the point value to be accumulated based on conditions for the printing performed by the printing apparatus.

**18.** The communication apparatus according to Claim 1,

wherein the print control unit adjusts the point value to be accumulated based on at least one of the following conditions for the printing performed by the printing apparatus: a number of sheets to be printed; a sheet size; either one-side or two-side printing; a page number to be printed on a single sheet; a quality of printing; and either color or monochrome printing.

**19.** The communication apparatus according to Claim 1,

wherein the print control unit accumulates the point value after adjusting the point value based on a number of pages that are printed until the printing performed by the printing apparatus is completed, in the case where the printing is not completed without errors.

**20.** The communication apparatus according to Claim 1, further comprising

a broadcast receiving unit operable to receive digital broadcast,

wherein the content obtaining unit obtains, via a transmission line, the print content from a content providing apparatus holding a print content, based on link information included in the digital broadcast received by the broadcast receiving unit.

**21.** The communication apparatus according to Claim 1, further comprising

a broadcast receiving unit operable to receive digital broadcast,

wherein the content obtaining unit obtains the print content directly from the digital broadcast received by the broadcast receiving unit.

**22.** A communication apparatus that is used by being connected to a content providing apparatus and a printing apparatus, the communication apparatus comprising:

a receiving unit operable to receive, from the content providing apparatus, a print content with which a point value is associated, the point value being used for reducing a purchase price of a consumable used for a printing performed by the printing apparatus;
a print control unit operable to i) output print data of the received print content so as to cause the printing apparatus to print said print data, and ii) accumulate the point value associated with the print content; and
an ordering unit operable to transmit, to the content providing apparatus, a notification for purchasing a consumable, together with the accumulated point value.

**23.** A program for a communication apparatus that is used by being connected to a printing apparatus and a consumable's order receiving apparatus for receiving an order for a consumable used by the printing apparatus, the program causing a computer to function as a unit comprised in the communication apparatus according to one of Claim 1 and Claim 22.

**24.** A communication apparatus that is used by being connected to a printing apparatus and a service processing apparatus for receiving a service to be provided for the printing apparatus, the communication apparatus comprising:

a user information obtaining unit operable to obtain information for identifying a user; and
a service transmitting unit operable to transmit, to the service processing apparatus, a notification for receiving a service, together with the information for identifying a user.

**25.** The communication apparatus according to Claim 24,

wherein the service to be provided for the printing apparatus is to place an on-line order for a consumable after receiving warning information warning of a remaining amount of a consumable used by the printing apparatus and device specific information held by the printing apparatus.

**26.** The communication apparatus according to Claim 24,

wherein the service to be provided for the printing apparatus is a grasp of a state of the printing apparatus and a maintenance on the printing apparatus after receiving usage status information of the printing apparatus and device specific information held by the printing apparatus.

**27.** The communication apparatus according to one of Claim 25 and Claim 26,

wherein the device specific information held by the printing apparatus includes one of a maker's name, a model number and a serial number of the printing apparatus, and a corresponding model number of a consumable.

**28.** The communication apparatus according to one of Claim 25 and Claim 26,

wherein the service transmitting unit transmits, to the service processing apparatus, a notification for receiving a next service, in the case where a notification for receiving a service is once transmitted to the service processing apparatus and only when the remaining amount of the consumable increases to surpass a warning level and again goes below the warning level.

**29.** The communication apparatus according to one of Claim 25 and Claim 26,

wherein in the case of sending a notification for receiving a service to the service processing unit, the service transmitting unit i) stores information on the remaining amount of the consumable into a non-volatile memory, when the communication apparatus is turned off, the information being received from the printing apparatus, and ii) judges whether or not to transmit said notification to the service processing apparatus using said information stored in the non-volatile memory and information on the remaining amount of the consumable newly received from the printing apparatus, when the communication apparatus is again turned on.

**30.** The communication apparatus according to Claim 24,

wherein the information for identifying a user is stored in an IC card, and is identification information specific to the IC card that is inserted in the communication apparatus.

**31.** A communication apparatus that is connected to a printing apparatus, comprising:

a receiving unit operable to receive response information transmitted from the printing apparatus; and
a display unit operable to display information relating to the printing apparatus based on the received response information.

**32.** The communication apparatus according to Claim 31,

wherein the response information has: a field indicating a type of events, a field indicating a type of character codes for a message relating to an event detected by the detecting unit, a field indicating a length of the message, and a variable-length field for storing the message.

**33.** The communication apparatus according to Claim 31,

wherein the display unit displays the message based on the field indicating the type of events and the field indicating the type of character codes which are included in the response information.

**34.** A program for a communication apparatus that is used by being connected to a printing apparatus and a service processing apparatus which receives a service to be provided for the printing apparatus, the program causing a computer to function as a unit comprised in the communication apparatus according to Claim 24.

**35.** A printing apparatus comprising:

a printing unit operable to receive and print print data of a print content, transmitted from a content outputting apparatus;
a consumable information generating unit operable to generate consumable information for identifying a used amount of a consumable used for the printing performed by the printing unit; and
a transmitting unit operable to transmit the generated consumable information to the content outputting apparatus,

wherein the content outputting apparatus performs ordering processing for the consumable based on the consumable information transmitted from the transmitting unit.

**36.** The printing apparatus according to Claim 35,

wherein the consumable information generating unit further obtains device specific information held by the printing apparatus for identifying the consumable,

the transmitting unit transmits the device specific information together with the consumable information, and

the content outputting apparatus performs the ordering processing based on the consumable information and the device specific information.

**37.** The printing apparatus according to Claim 36,

wherein the device specific information includes one of a maker's name, a model number and a serial number of the printing apparatus, and a corresponding model number of a consumable.

**38.** The printing apparatus according to Claim 36,

wherein the consumable information includes information indicating a remaining amount of the consumable.

**39.** The printing apparatus according to Claim 36,

wherein the consumable information includes information indicating whether or not a state in which a consumable runs out has occurred, the state indicating that a remaining amount of a consumable goes below a predetermined amount.

**40.** The printing apparatus according to Claim 36, further comprising

a print completion detecting unit operable to detect a completion of the printing performed by the printing unit,

wherein, in the case where the print completion detecting unit detects a completion of the printing, the transmitting unit further transmits a notification indicating said completion to the content outputting apparatus, and

the content outputting apparatus accumulates a point value to be used for reducing a purchase price of the consumable, based on the notification of the print completion transmitted from the transmitting unit.

**41.** The printing apparatus according to Claim 36,

wherein the printing unit receives a point value to be used for reducing a purchase price of the consumable, together with the print data of the print content, and

the printing apparatus further comprises:

a point accumulating unit operable to accumulate and hold a point value associated with the print content, in the case where the print data is printed by the printing unit; and
a point outputting unit operable to transmit, to the content outputting apparatus, the point value held by the point accumulating unit.

**42.** The printing apparatus according to Claim 36, further comprising

a storing unit operable to store the device specific information for identifying the printing apparatus,

wherein the transmitting unit transmits, to the content outputting apparatus, the device specific information stored in the storing unit, together with the consumable information,

the consumable information and the device specific information are described in a markup language for data broadcasting, and

the content outputting apparatus that is a digital broadcast receiver analyzes and displays on a screen the consumable information and the device specific information which are transmitted from the transmitting unit.

**43.** The printing apparatus according to Claim 36, further comprising

a maintenance information generating unit operable to generate maintenance information useful for protecting the printing apparatus,

wherein the transmitting unit further transmits, to the content outputting apparatus, the maintenance information generated by the maintenance information generating unit, and

the content outputting apparatus sends, to a person who performs maintenance on the printing apparatus, the maintenance information transmitted from the transmitting unit.

**44.** The printing apparatus according to Claim 43,

wherein the maintenance information includes movable history information indicating at least one of a total amount of time for power distribution since the printing apparatus is used, a moving distance of a print head, and a number of sheets used for printing.

**45.** The printing apparatus according to Claim 43,

the maintenance information includes error information indicating at least one of date and time of errors occurred in the printing apparatus in a past, a type of errors, and a number of errors depending on the type of errors.

**46.** The printing apparatus according to Claim 43, further comprising

a storing unit operable to store the device specific information for identifying the printing apparatus,

wherein the transmitting unit transmits, to the content outputting apparatus, the device specific information stored in the storing unit, together with the maintenance information.

**47.** The printing apparatus according to Claim 46,

wherein the consumable information, the maintenance information and the device specific information are described in a markup language for data broadcasting, and

the content outputting apparatus that is a digital broadcast receiver analyzes and displays on a screen the consumable information, the maintenance information and the device specific information which are transmitted from the transmitting unit.

**48.** The printing apparatus according to Claim 35, further comprising

a storing unit operable to store device specific information for identifying the printing apparatus,

wherein the transmitting unit transmits, to the content outputting apparatus, the device specific information stored in the storing unit, together with the consumable information.

**49.** A printing apparatus comprising:

a printing unit operable to receive and print print data of a print content, transmitted from a content outputting apparatus;
a maintenance information generating unit operable to generate maintenance information useful for protecting each part used for the printing performed by the printing unit; and
a transmitting unit operable to transmit the generated maintenance information to the content outputting apparatus,

wherein the content outputting apparatus sends, to a person who performs maintenance on the printing apparatus, the maintenance information transmitted from the transmitting unit.

**50.** The printing apparatus according to Claim 49,

wherein the maintenance information includes movable history information indicating at least one of a total amount of time for power distribution since the printing apparatus is used, a moving distance of a print head, and a number of sheets used for printing.

**51.** The printing apparatus according to Claim 49,

wherein the maintenance information includes error information indicating at least one of date and time of errors occurred in the printing apparatus in a past, a type of errors and a number of errors depending on the type of errors.

**52.** The printing apparatus according to Claim 49,

wherein the maintenance information includes information indicating at least one of version information of a firmware that is being used by the printing apparatus.

**53.** The printing apparatus according to Claim 49, further comprising

a storing unit operable to store device specific information for identifying the printing apparatus,

wherein the transmitting unit transmits, to the content outputting apparatus, the device specific information stored in the storing unit, together with the maintenance information.

**54.** The printing apparatus according to Claim 53,

wherein the device specific information includes at least one of a maker's name, a model number and a serial number of the printing apparatus, and a corresponding model number of a consumable.

**55.** The printing apparatus according to Claim 53,

wherein the maintenance information and the device specific information are described in a markup language for data broadcasting, and

the content outputting apparatus that is a digital broadcast receiver analyzes and displays on a screen the maintenance information and the device specific information which are transmitted from the transmitting unit.

**56.** A printing apparatus comprising:

a printing unit operable to receive and print print data of a print content, transmitted from a content outputting apparatus;
a service information generating unit operable to generate service information useful for identifying a state of each part used for the printing performed by the printing unit;
a device specific information keeping unit operable to keep device specific information held by the printing unit; and
a transmitting unit operable to transmit, to the content outputting apparatus, the generated service information and the device specific information taken out from the device specific information keeping unit,

wherein the content outputting apparatus is a digital broadcast receiver, and asks for the service based on the service information and the device specific information which are transmitted from the transmitting unit.

**57.** The printing apparatus according to Claim 56,

wherein the service information is warning information warning of a remaining amount of a consumable that is being used

by the printing apparatus.

**58.** The printing apparatus according to Claim 56,

wherein the service information is information indicating a usage status of the printing apparatus.

**59.** The printing apparatus according to Claim 56,

wherein the device specific information includes at least one of a maker's name, a model number and a serial number of the printing apparatus, and a corresponding model number of a consumable.

**60.** The printing apparatus according to Claim 56,

wherein the service information is version information of a firmware that is being used by the printing apparatus.

**61.** The printing apparatus according to Claim 60,

wherein the version information of the firmware indicates version information of each execution file composing the firmware that is being used by the printing apparatus.

**62.** The printing apparatus according to Claim 60,

wherein the version information of the firmware indicates version information of each of a plurality of micro-computers for realizing the firmware that is being used by the printing apparatus.

**63.** A printing apparatus comprising:

a printing unit operable to receive and print print data of a print content, transmitted from a content outputting apparatus;
a detecting unit operable to detect a state of each part involved in the printing performed by the printing unit;
a service information generating unit operable to generate service information useful for handling the each part detected by the detecting unit;
a response information generating unit operable to generate response information for responding to the content outputting apparatus, based on the information generated by the service information generating unit; and
a transmitting unit operable to transmit the response information to the content outputting apparatus,

wherein the content outputting apparatus that is a digital broadcast receiver displays, on a screen, device information according to the printing unit, based on the response information transmitted from the transmitting unit.

**64.** The printing apparatus according to Claim 63,

wherein the response information has at least: a field indicating a type of events detected by the detecting unit; a field indicating a type of character codes for a message relating to the event detected by the detecting unit; a field indicating a length of the message; and a variable-length field for storing the message.

**65.** A program for a printing apparatus which prints print data of a print content, transmitted from a content outputting apparatus, the program causing a computer to function as a unit comprised in the printing apparatus according to one of Claim 35, Claim 49, Claim 56 and Claim 63.

**66.** A consumable's order receiving apparatus that is connected, via a transmission line, to a communication apparatus which outputs print data of a print content to a printing apparatus, and receives, from the communication apparatus, an order for a consumable used by the printing apparatus,

wherein the communication apparatus comprises:

a content obtaining unit operable to obtain the print content with which a point value is associated;
a print control unit operable to i) output print data of the obtained print content so as to cause the printing apparatus to print said print data, and ii) accumulate the point value associated with the print content; and
an ordering unit operable to transmit, to the consumable's order receiving apparatus, a notification for ordering a consumable, together with the accumulated point value, and
the consumable's order receiving apparatus comprises:

an order-receiving unit operable to receive, from the communication apparatus, the order for the consumable together with the point value; and
a charging processing unit operable to perform charging processing of reducing a purchase price of the consumable by an amount equivalent to the received point value.

**67.** The consumable's order receiving apparatus, according to Claim 66,

wherein the content obtaining unit obtains, via a transmission line, the print content from a content providing apparatus having a print content, and

the charging processing unit sends, to the content providing apparatus, a notification charging for a cost equivalent to the point value.

**68.** The consumable's order receiving apparatus, according to Claim 67,

wherein the charging processing unit orders the consumable to a person who provides the consumable, and sends the notification charging for the cost to the content providing apparatus.

**69.** A program for a consumable's order receiving apparatus that is connected to a communication apparatus which i) outputs, to a printing apparatus, print data of a print content, and ii) receives, from the communication apparatus, an order for a consumable used by the printing apparatus, the program causing a computer to function as a unit comprised in the consumable's order receiving apparatus according to one of Claim 66 through Claim 68.

**70.** A communication system comprising a printing apparatus, a communication apparatus for outputting, to the printing apparatus, print data of a print content, and a consumable's order receiving apparatus for receiving an order for a consumable used by the printing apparatus,

wherein the communication apparatus includes:

a content obtaining unit operable to obtain a print content with which a point value is associated;
a print control unit operable to i) output the print data of the obtained print content so as to cause the printing apparatus to print said print data, and ii) accumulate the point value associated with the print content; and
an ordering unit operable to transmit, to the consumable's order receiving apparatus, a notification for ordering a consumable, together with the accumulated point value, and
the consumable's order receiving apparatus includes:

an order-receiving unit operable to receive, from the communication apparatus, the order for the consumable together with the point value; and
a charging unit operable to perform charging processing of reducing a purchase price of the consumable by an amount equivalent to the received point value.

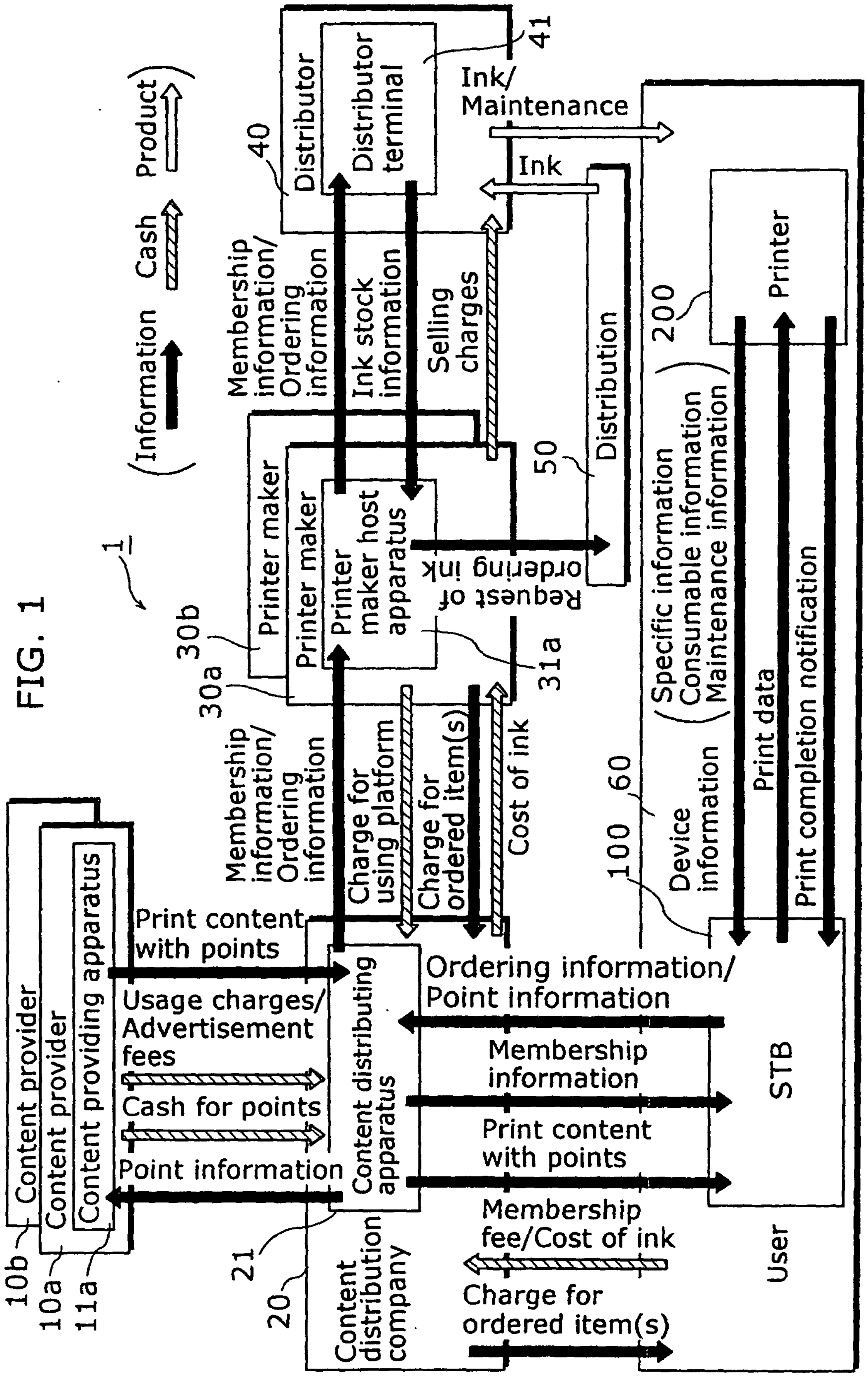

Information
Cash
Product
1
40
Distributor
Distributor terminal
41
Ink/ Maintenance
Ink
30b
Printer maker
30a
Printer maker
Printer maker host apparatus
31a
Membership information/ Ordering information
Ink stock information
Selling charges
Request of ordering ink
50
Distribution
200
Printer
Specific information
Consumable information
Maintenance information
10b
Content provider
10a
Content provider
11a
Content providing apparatus
Print content with points
Usage charges/ Advertisement fees
Cash for points
Point information
Membership information/ Ordering information
Charge for using platform
Charge for ordered item(s)
Cost of ink
20
Content distribution company
21
Content distributing apparatus
100
60
Device information
Print data
Print completion notification
Ordering information/ Point information
Membership information
Print content with points
Membership fee/Cost of ink
Charge for ordered item(s)
STB
User

FIG. 1

FIG. 2

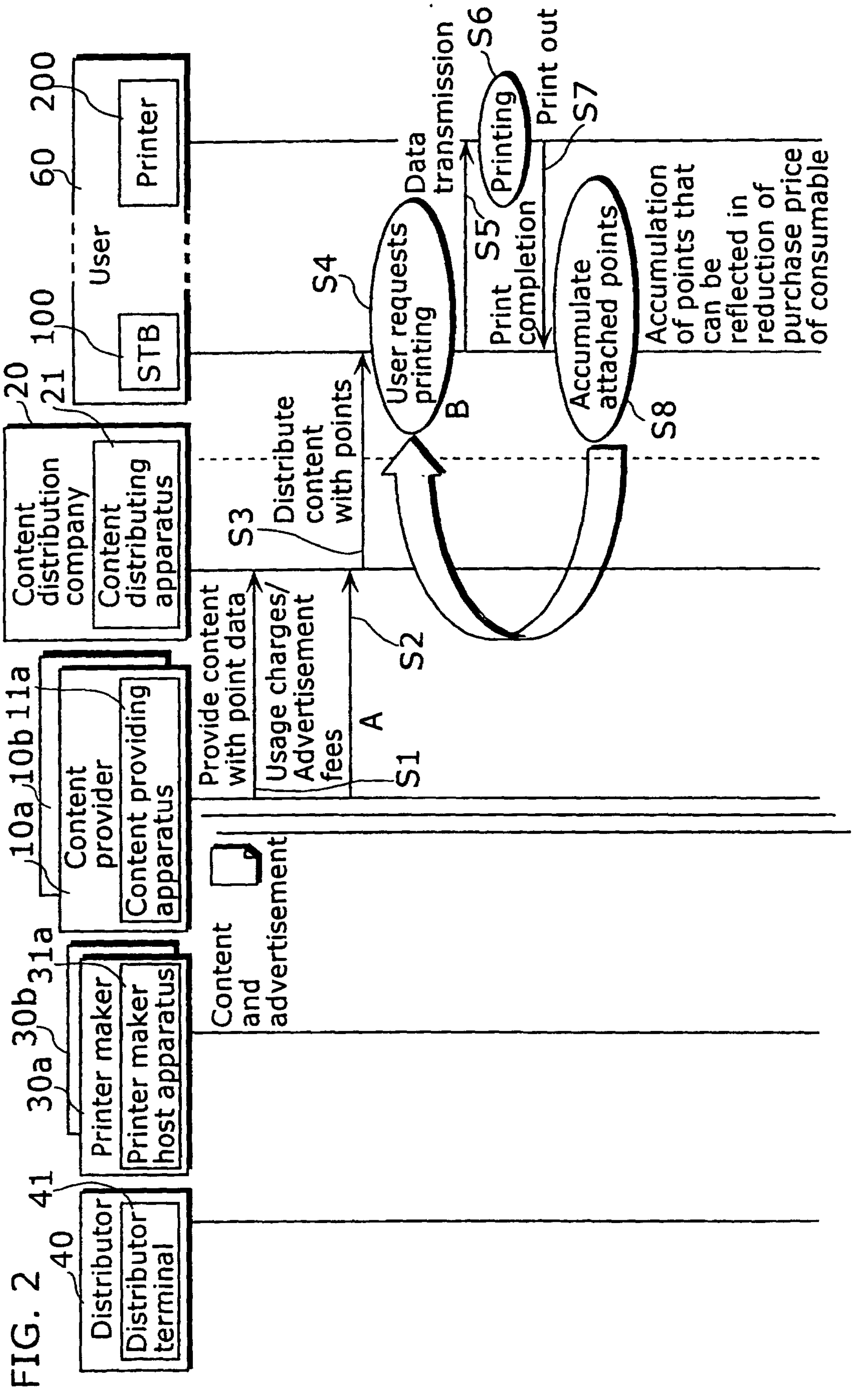
40
Distributor
41
Distributor terminal
30a
30b
31a
Printer maker
Printer maker host apparatus
10a
10b
11a
Content provider
Content providing apparatus
20
21
Content distribution company
Content distributing apparatus
100
STB
User
60
200
Printer
Content and advertisement
Provide content with point data
Usage charges/ Advertisement fees
A
S1
S2
S3
Distribute content with points
S4
User requests printing
B
Data transmission
S5
S6
Printing
Print out
S7
Print completion
Accumulate attached points
S8
Accumulation of points that can be reflected in reduction of purchase price of consumable

FIG. 3

```
<?xml version="1.0" encoding="Shift_JIS" ?>
<!DOCTYPE bml PUBLIC "+//ARIB STD-B24:1999//DTD BML Document//JA"
"bml_1_0. dtd">
<?bml bml-version="1.0" ?>

<bml>
<head>
<title>
item01
</title>
    <content_point>
     2
     <point_rate>
      <size_rate>
        B3=3.0
        B4=1.5
        B5=0.7
        A3=2.0
        A4=1.0
        A5=0.5
      </size_rate>
      <color_rate>
        color=3.0
        mono=1.0
      </color_rate>
     </point_rate>
    </content_point>

</head>
<body          id="scene0"          style="display-aspect-ratio:16v9;
resolution:960x540;                 background-image:url(cont01.jpg);
clut:url(bml01.clt); used-key-list:basic data-button;"
onload="load();"onunload="unload();">

<div style="width:960px; visibility:visible; height:540px:">
<!--- JPEG --->
<object type="image/jpeg" id="car" data="car. jpg"
style="visibility:visible;     left:60px;     top:140px;     width:340px;
height:240px;" />
<object type="image/jpeg" id="cup" data="cup. jpg"
style="visibility:visible;     left:500px;     top:210px;     width:340px;
height:230px:" />

<!--- video/audio --->

</div>
</body>
</bml>
```

FIG. 4

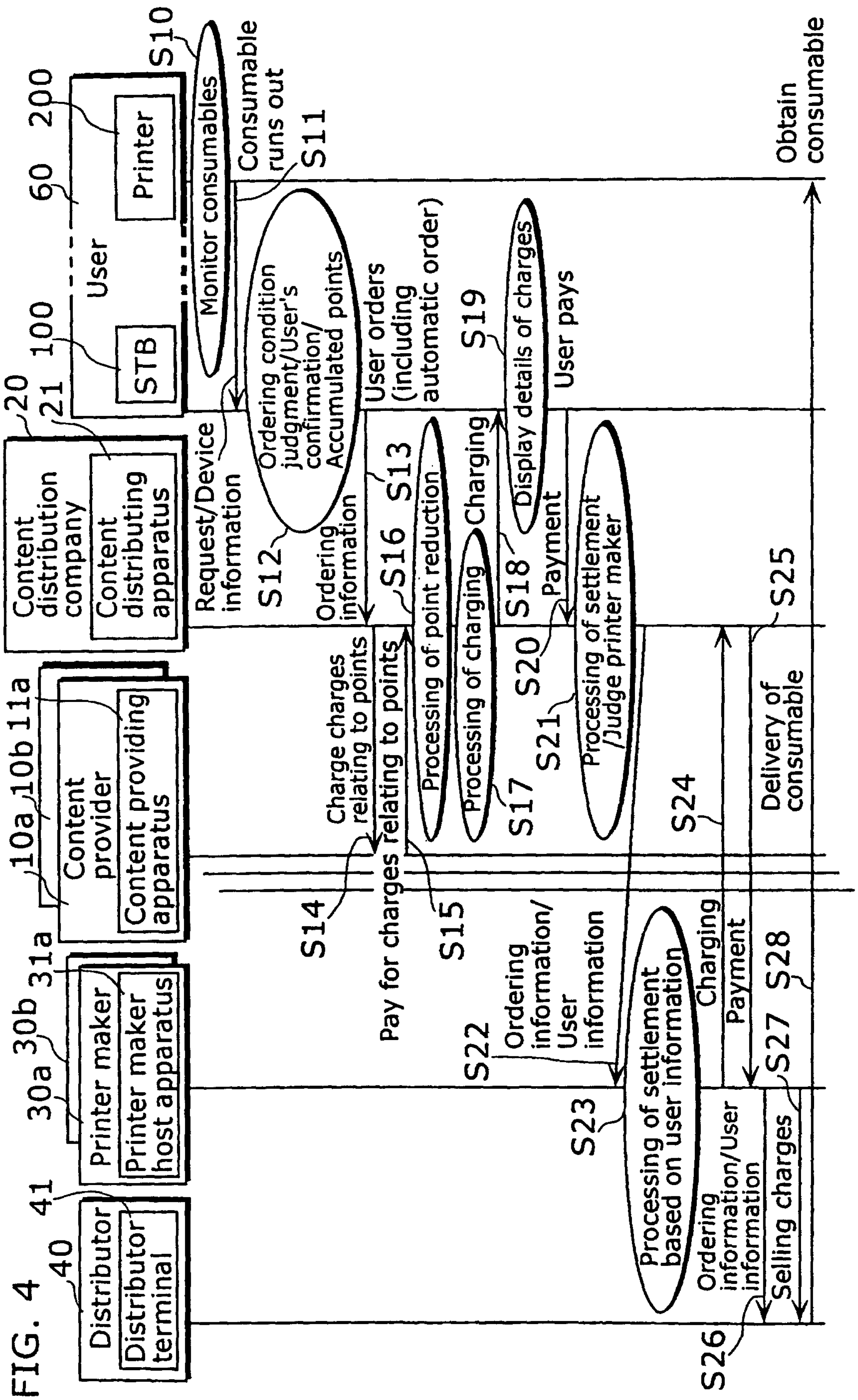

Distributor
Distributor terminal
40
41
Printer maker
Printer maker host apparatus
30a
30b
31a
Content provider
Content providing apparatus
10a
10b
11a
Content distribution company
Content distributing apparatus
20
21
User
STB
Printer
100
60
200
S10
Monitor consumables
Consumable runs out
S11
Request/Device information
S12
Ordering condition judgment/User's confirmation/Accumulated points
User orders (including automatic order)
Ordering information
S13
S16
Processing of point reduction
Charge charges relating to points
S14
Pay for charges relating to points
S15
Processing of charging
S17
Charging
S18
S19
Display details of charges
User pays
Payment
S20
S21
Processing of settlement /Judge printer maker
S22
Ordering information/User information
S23
Processing of settlement based on user information
S24
Delivery of consumable
S25
Charging
Payment
S27
S28
Ordering information/User information
Selling charges
S26
Obtain consumable

FIG. 5

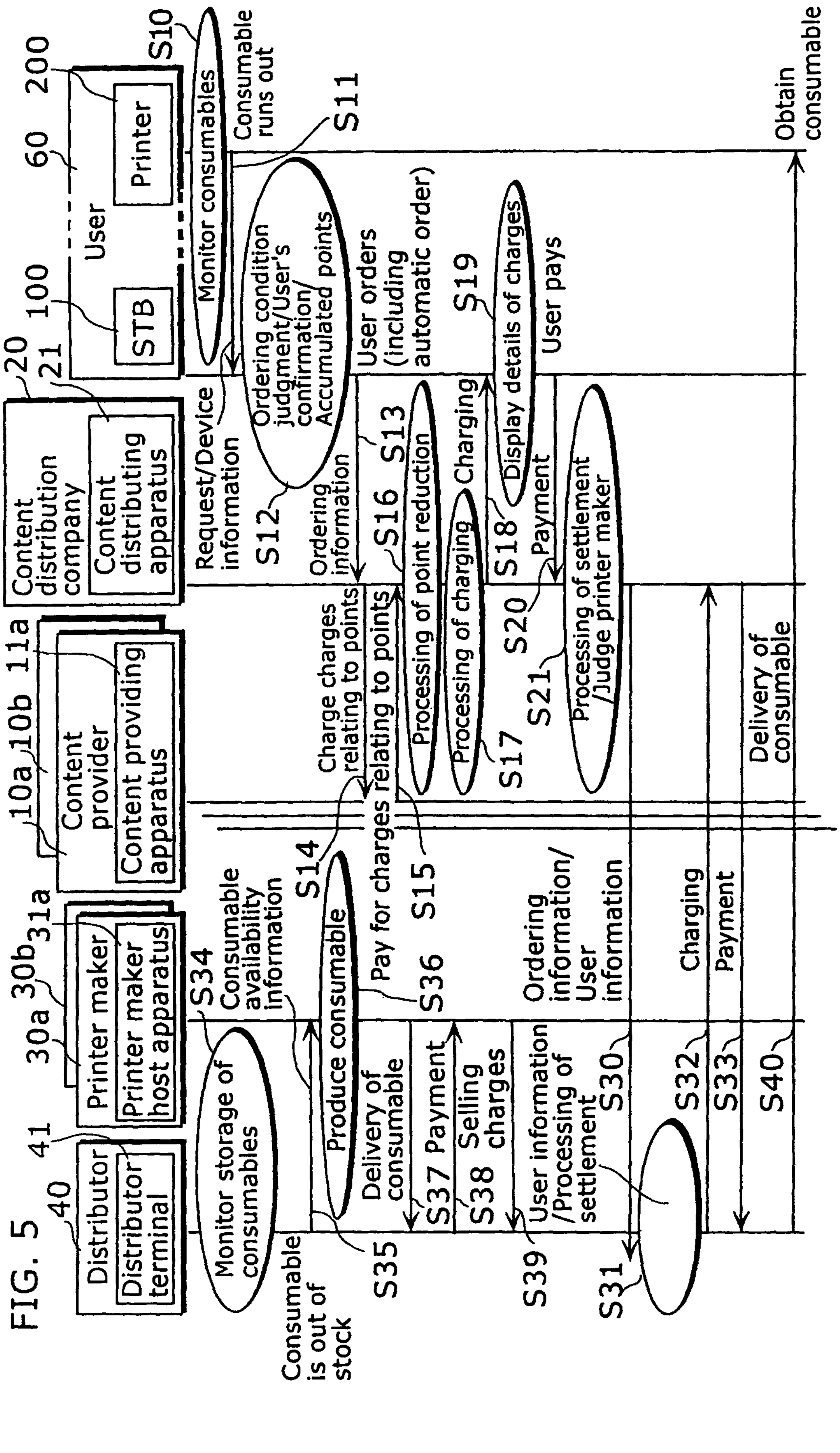
40
41
Distributor
Distributor terminal
30a
30b
31a
Printer maker
Printer maker host apparatus
10a
10b
11a
Content provider
Content providing apparatus
20
21
Content distribution company
Content distributing apparatus
100
60
200
User
STB
Printer
S10
Monitor consumables
Consumable runs out
S11
Request/Device information
S12
Ordering condition judgment/User's confirmation/Accumulated points
User orders (including automatic order)
Ordering information
S13
S16
Processing of point reduction
Charge charges relating to points
S14
Pay for charges relating to points
S15
Charging
S17
Processing of charging
S18
S19
Display details of charges
User pays
Payment
S20
S21
Processing of settlement /Judge printer maker
Delivery of consumable
Obtain consumable
Monitor storage of consumables
Consumable is out of stock
S34
Consumable availability information
Produce consumable
S35
S36
Delivery of consumable
S37 Payment
Payment
S38 Selling charges
S39
User information /Processing of settlement
Ordering information/ User information
S30
S31
S32
Charging
S33
Payment
S40

FIG. 6

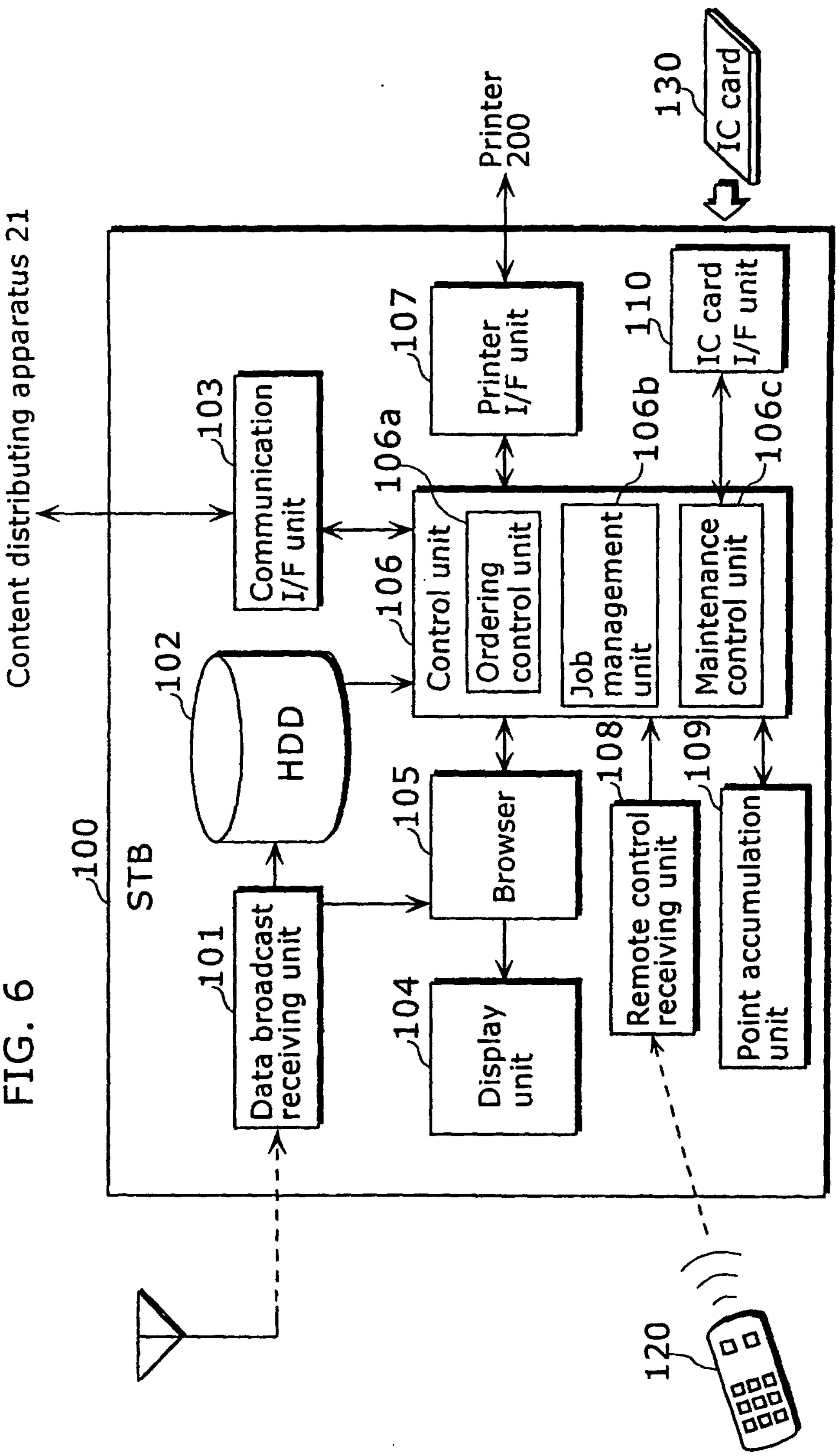

Content distributing apparatus 21
Printer 200
130
IC card
100
STB
101
Data broadcast receiving unit
102
HDD
103
Communication I/F unit
104
Display unit
105
Browser
106
Control unit
106a
Ordering control unit
106b
Job management unit
106c
Maintenance control unit
107
Printer I/F unit
108
Remote control receiving unit
109
Point accumulation unit
110
IC card I/F unit
120

FIG. 7

Point table

109a

| Content provider | Accumulated points |
|---|---|
| ⋮ | ⋮ |
| Provider A | 620 |
| Provider B | 35 |
| ⋮ | ⋮ |

FIG. 8

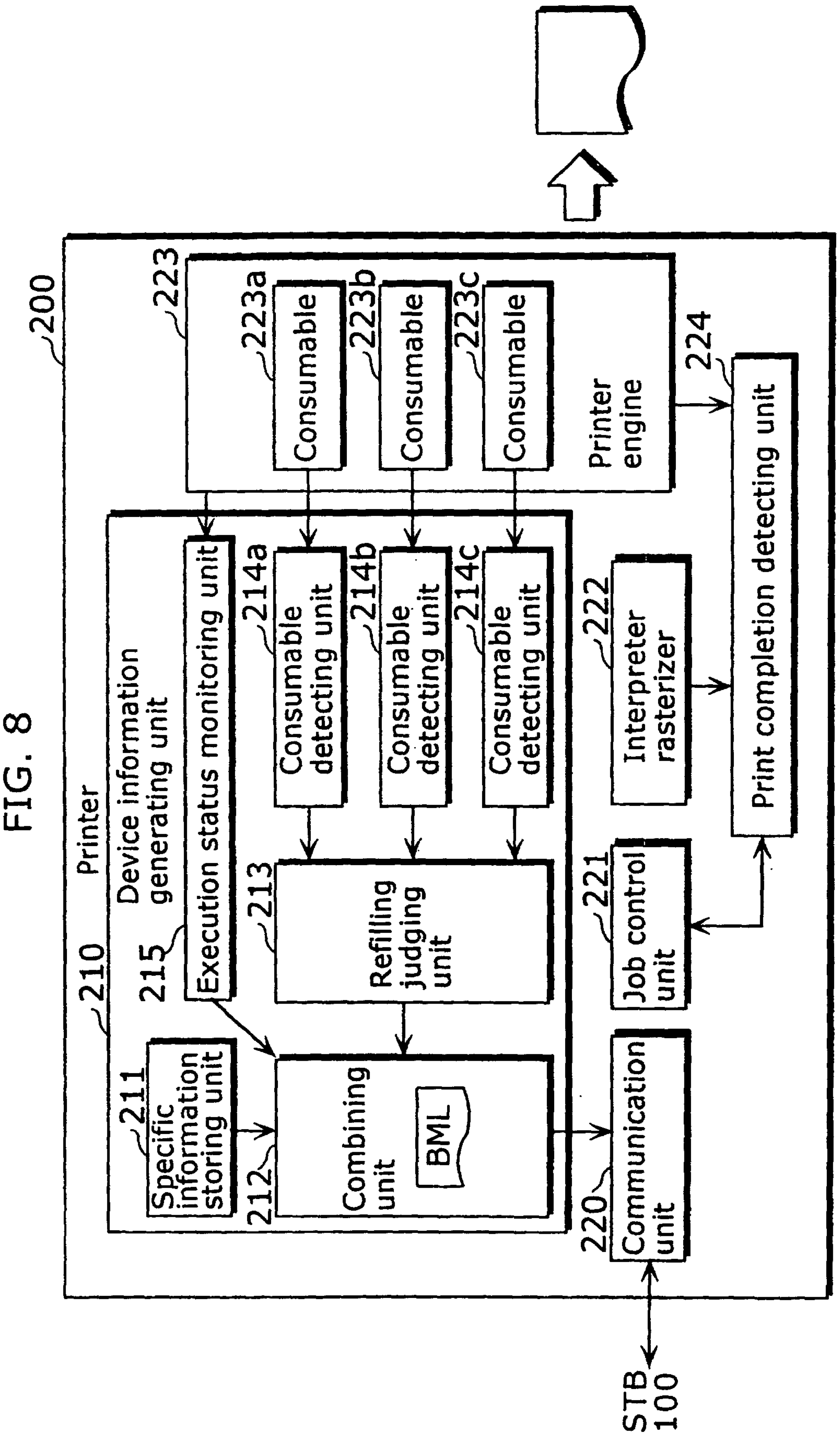
200
Printer
210
Device information generating unit
211
Specific information storing unit
212
Combining unit
BML
215
Execution status monitoring unit
213
Refilling judging unit
214a
Consumable detecting unit
214b
Consumable detecting unit
214c
Consumable detecting unit
223
223a
Consumable
223b
Consumable
223c
Consumable
Printer engine
224
Print completion detecting unit
222
Interpreter rasterizer
221
Job control unit
220
Communication unit
STB 100

FIG. 9

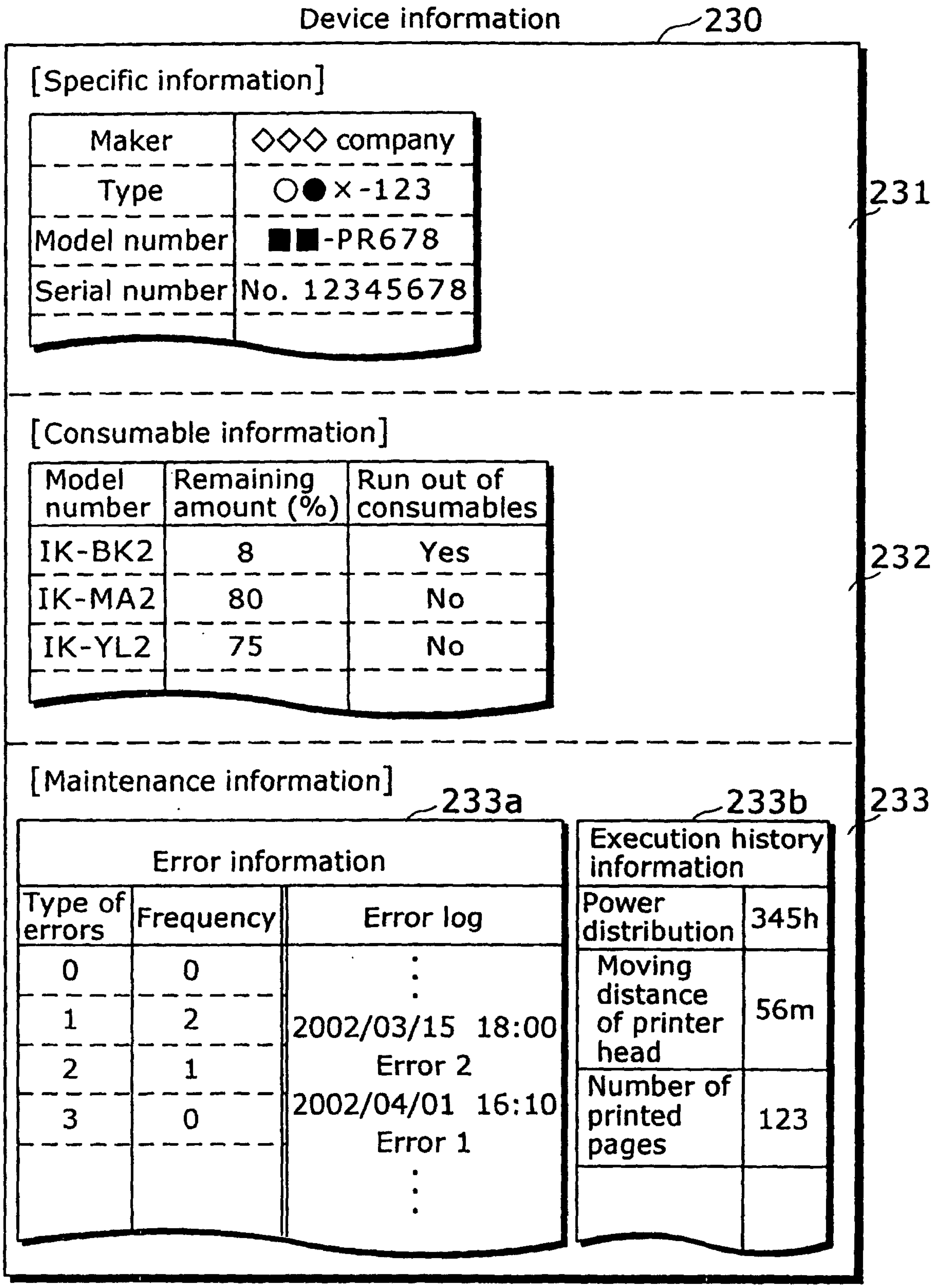
Device information
230
[Specific information]
Maker
◇◇◇ company
Type
○●×-123
Model number
■■-PR678
Serial number
No. 12345678
231
[Consumable information]
Model number
Remaining amount (%)
Run out of consumables
IK-BK2
8
Yes
IK-MA2
80
No
IK-YL2
75
No
232
[Maintenance information]
233a
233b
233
Error information
Type of errors
Frequency
Error log
0
0
1
2
2
1
3
0
2002/03/15 18:00
Error 2
2002/04/01 16:10
Error 1
Execution history information
Power distribution
345h
Moving distance of printer head
56m
Number of printed pages
123

FIG. 10

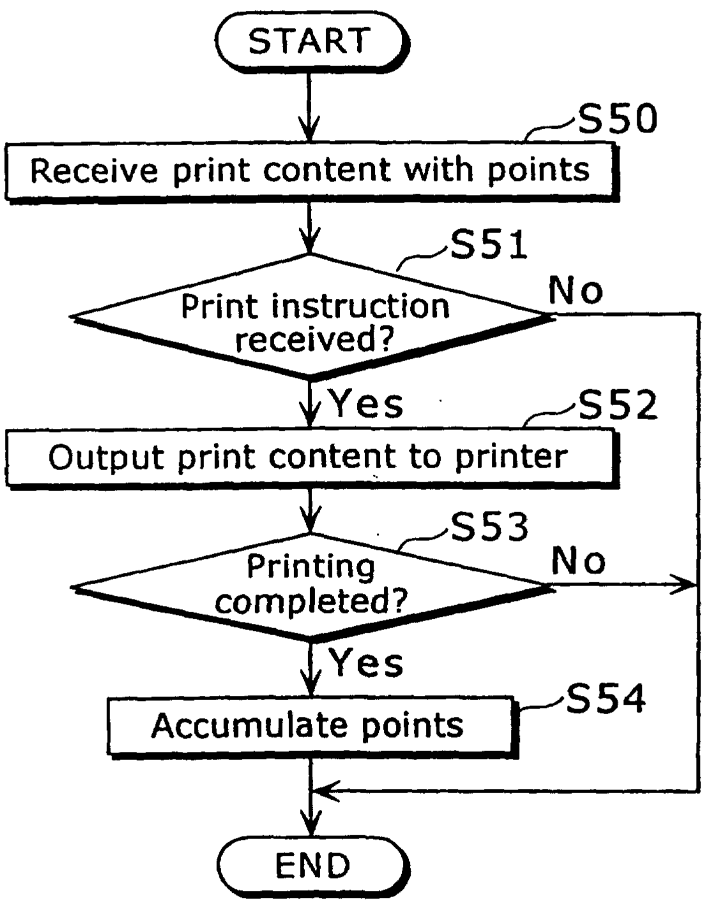
START
S50
Receive print content with points
S51
Print instruction received?
No
Yes
S52
Output print content to printer
S53
Printing completed?
No
Yes
S54
Accumulate points
END

FIG. 11

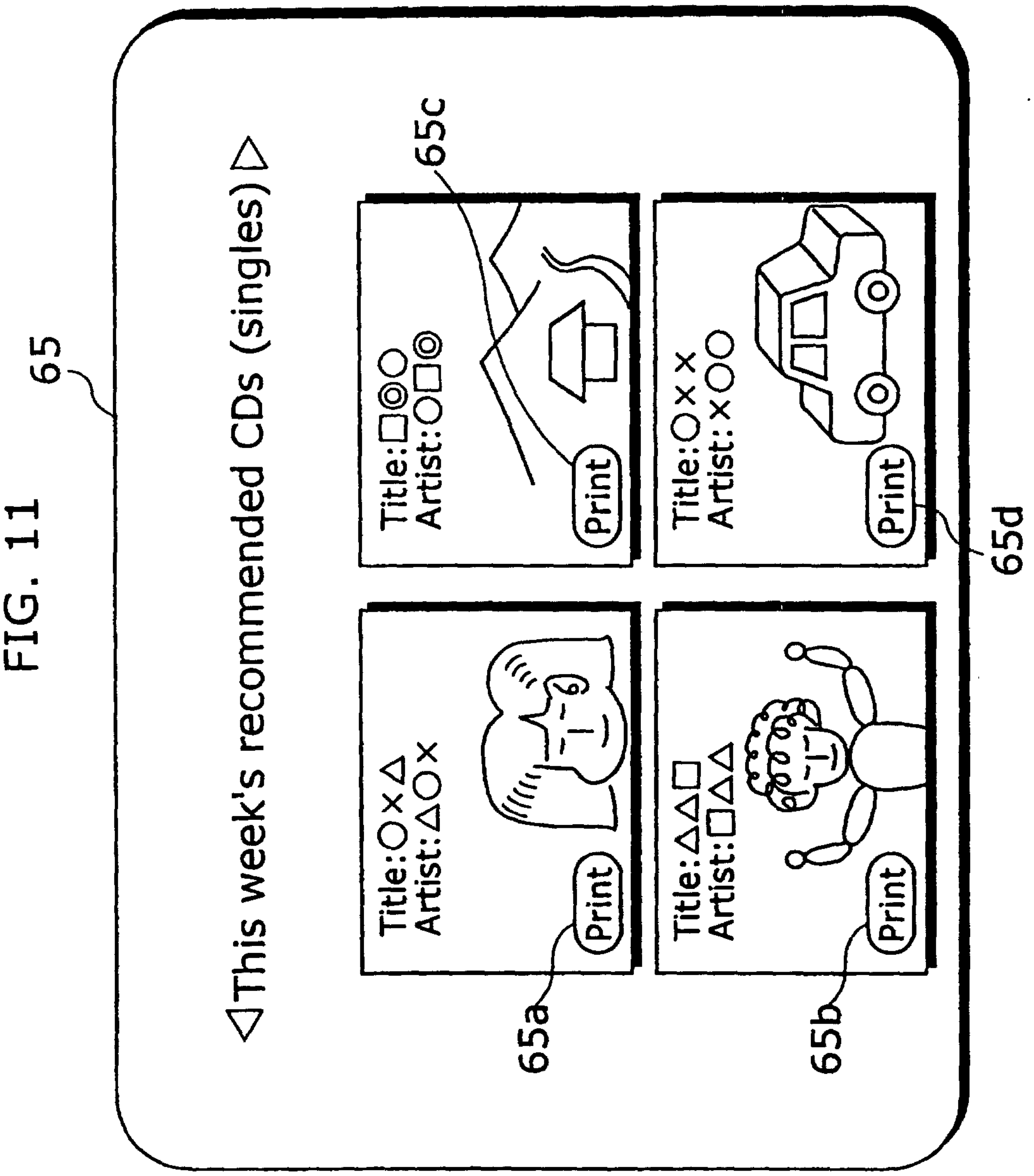
65
◁This week's recommended CDs (singles)▷
Title:○×△
Artist:△○×
Print
65a
Title:△△□
Artist:□△△
Print
65b
Title:□◎○
Artist:○□◎
Print
65c
Title:○××
Artist:×○○
Print
65d

FIG. 12

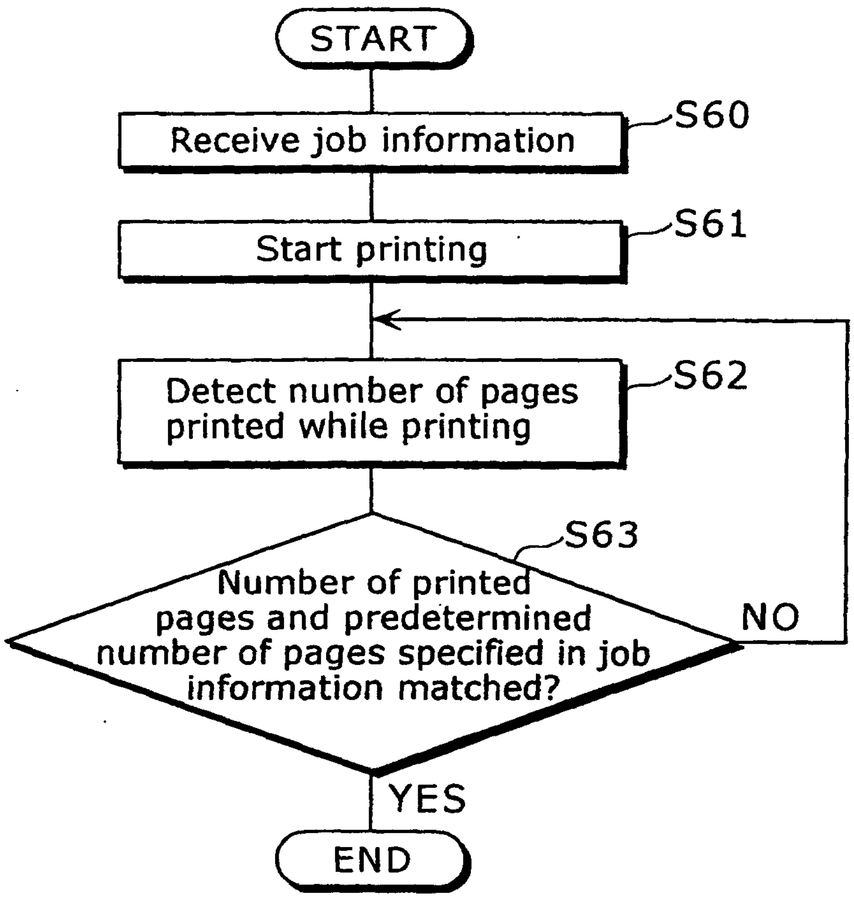
START
Receive job information
S60
Start printing
S61
Detect number of pages printed while printing
S62
S63
Number of printed pages and predetermined number of pages specified in job information matched?
NO
YES
END

FIG. 13

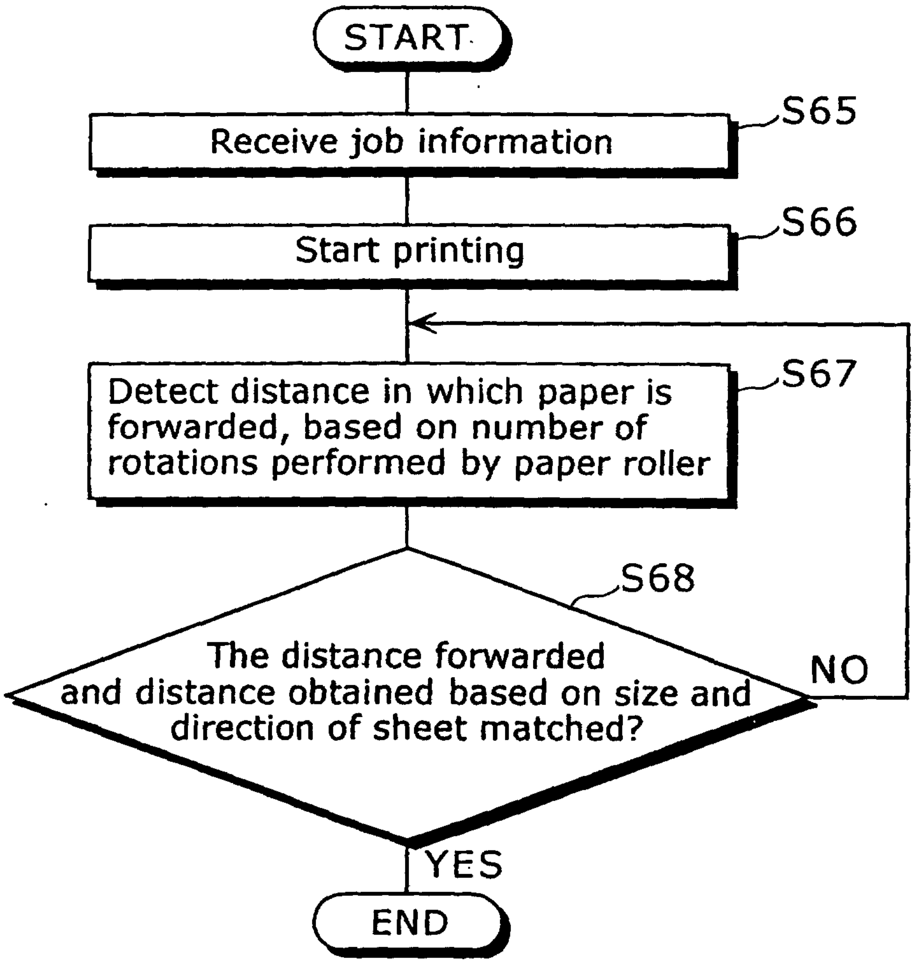
START
Receive job information
S65
Start printing
S66
Detect distance in which paper is forwarded, based on number of rotations performed by paper roller
S67
The distance forwarded and distance obtained based on size and direction of sheet matched?
S68
NO
YES
END

FIG. 14

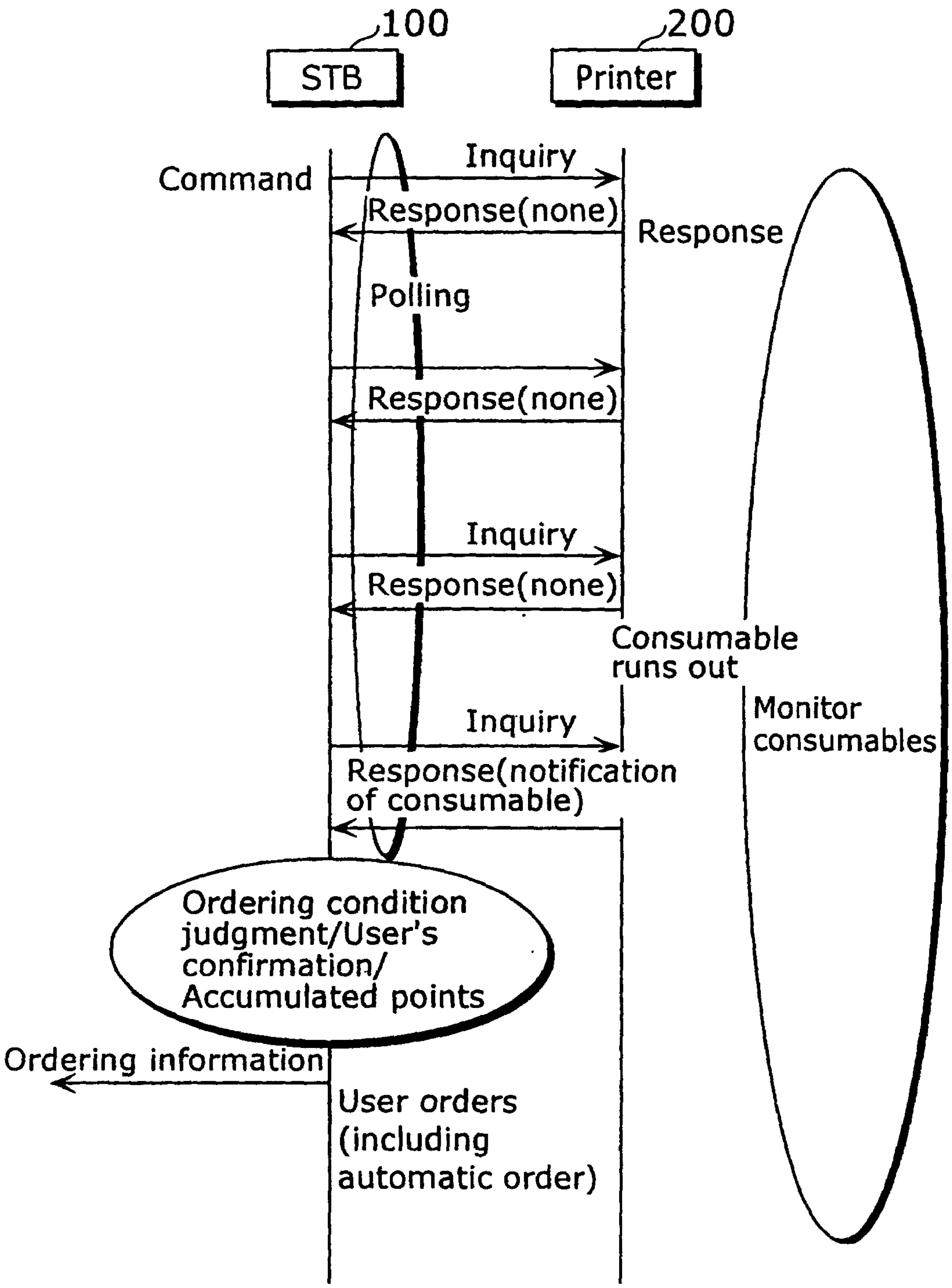
100
STB
200
Printer
Command
Inquiry
Response(none)
Response
Polling
Response(none)
Inquiry
Response(none)
Consumable runs out
Monitor consumables
Inquiry
Response(notification of consumable)
Ordering condition judgment/User's confirmation/ Accumulated points
Ordering information
User orders (including automatic order)

FIG. 15

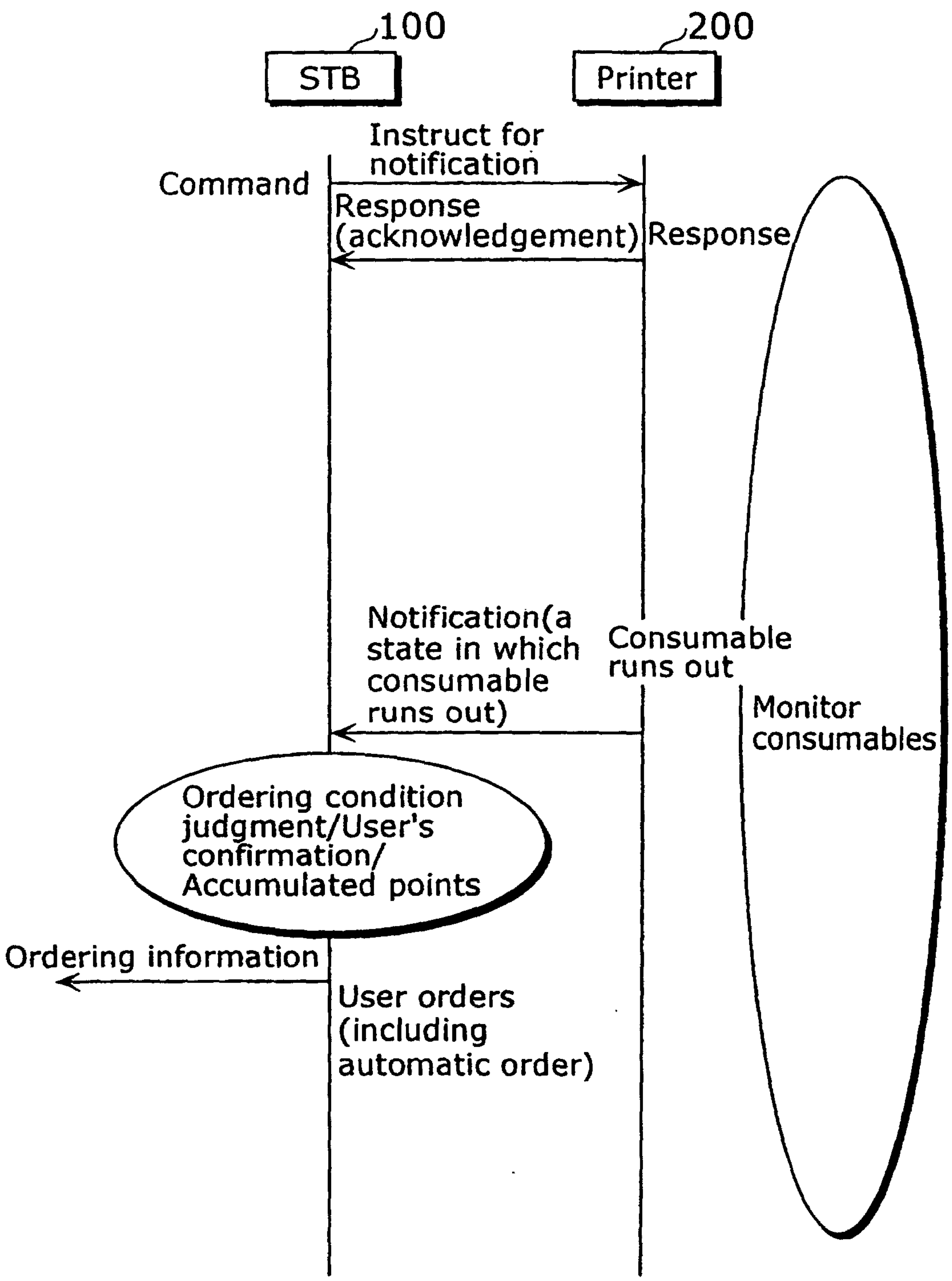
100
STB
200
Printer
Instruct for notification
Command
Response (acknowledgement)
Response
Notification(a state in which consumable runs out)
Consumable runs out
Monitor consumables
Ordering condition judgment/User's confirmation/ Accumulated points
Ordering information
User orders (including automatic order)

FIG. 16

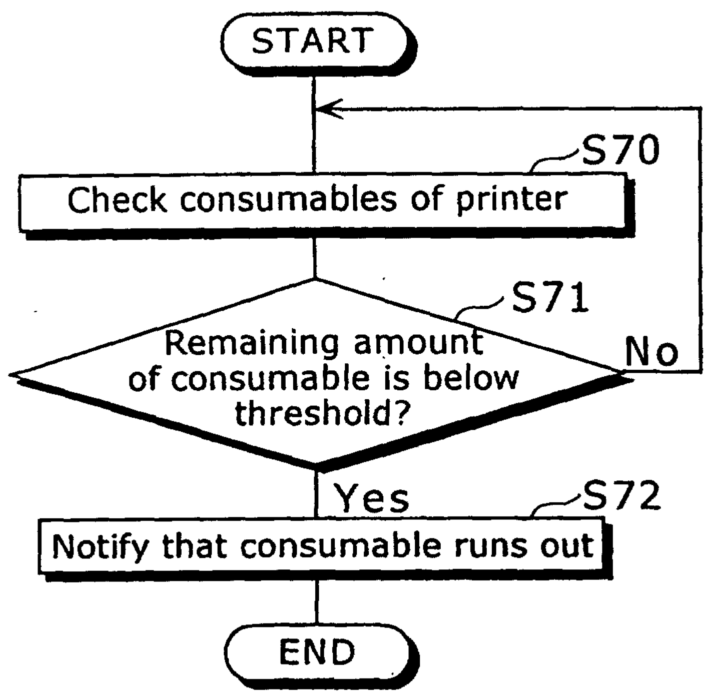
START
S70
Check consumables of printer
S71
Remaining amount of consumable is below threshold?
No
Yes
S72
Notify that consumable runs out
END

FIG. 17

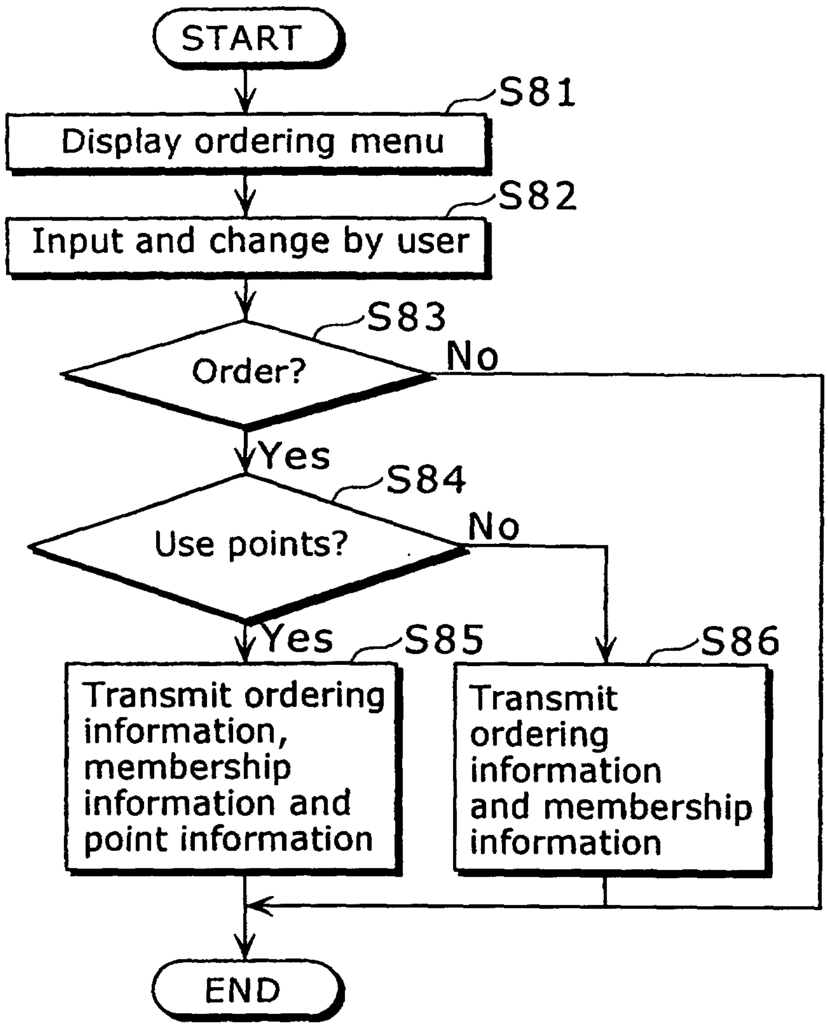
START
S81
Display ordering menu
S82
Input and change by user
S83
Order?
No
Yes
S84
Use points?
No
Yes
S85
Transmit ordering information, membership information and point information
S86
Transmit ordering information and membership information
END

FIG. 18

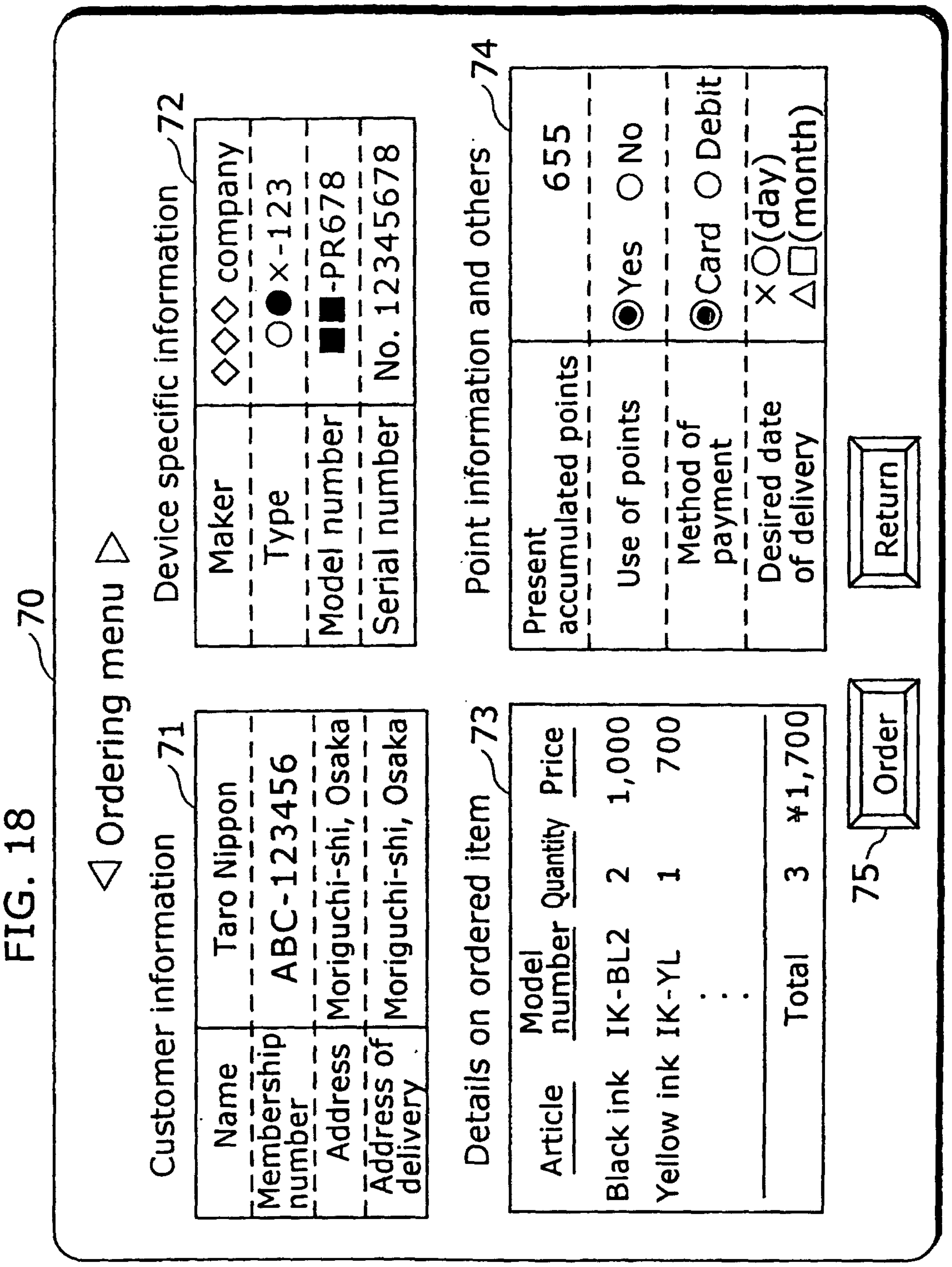
70
◁ Ordering menu ▷
Customer information
71
Name
Taro Nippon
Membership number
ABC-123456
Address
Moriguchi-shi, Osaka
Address of delivery
Moriguchi-shi, Osaka
Device specific information
72
Maker
◇◇◇ company
Type
○●×-123
Model number
■■-PR678
Serial number
No. 12345678
Details on ordered item
73
Article
Model number
Quantity
Price
Black ink
IK-BL2
2
1,000
Yellow ink
IK-YL
1
700
Total
3
¥1,700
Point information and others
74
Present accumulated points
655
Use of points
◉Yes ○No
Method of payment
◉Card ○Debit
Desired date of delivery
×○(day)
△□(month)
75
Order
Return

FIG. 19

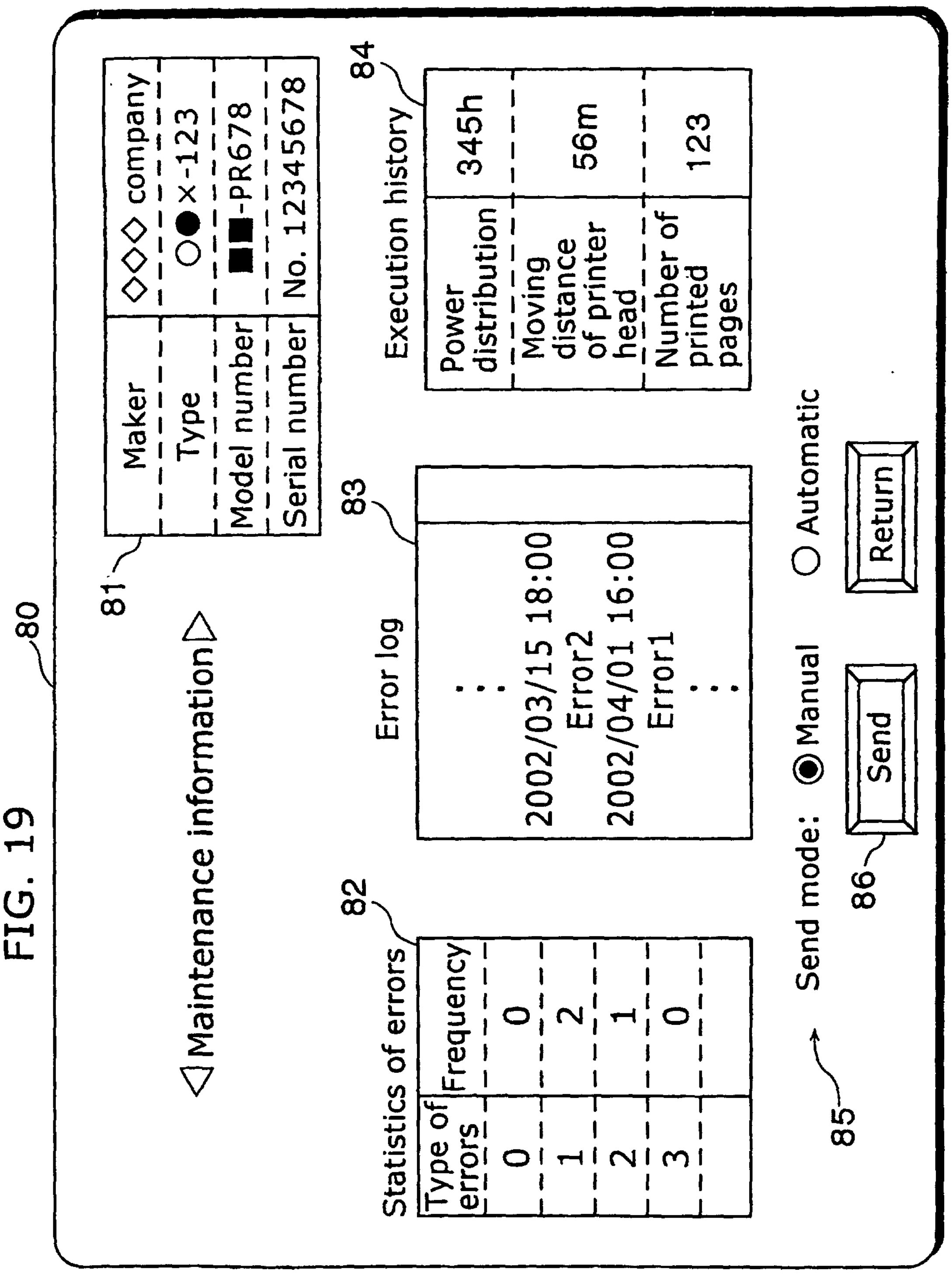
80
◁Maintenance information▷
81
Maker
◇◇◇ company
Type
○●×-123
Model number
■■-PR678
Serial number
No. 12345678
82
Statistics of errors
Type of errors
Frequency
0
0
1
2
2
1
3
0
83
Error log
2002/03/15 18:00
Error2
2002/04/01 16:00
Error1
84
Execution history
Power distribution
345h
Moving distance of printer head
56m
Number of printed pages
123
85
Send mode:
Manual
Automatic
86
Send
Return

FIG.20A

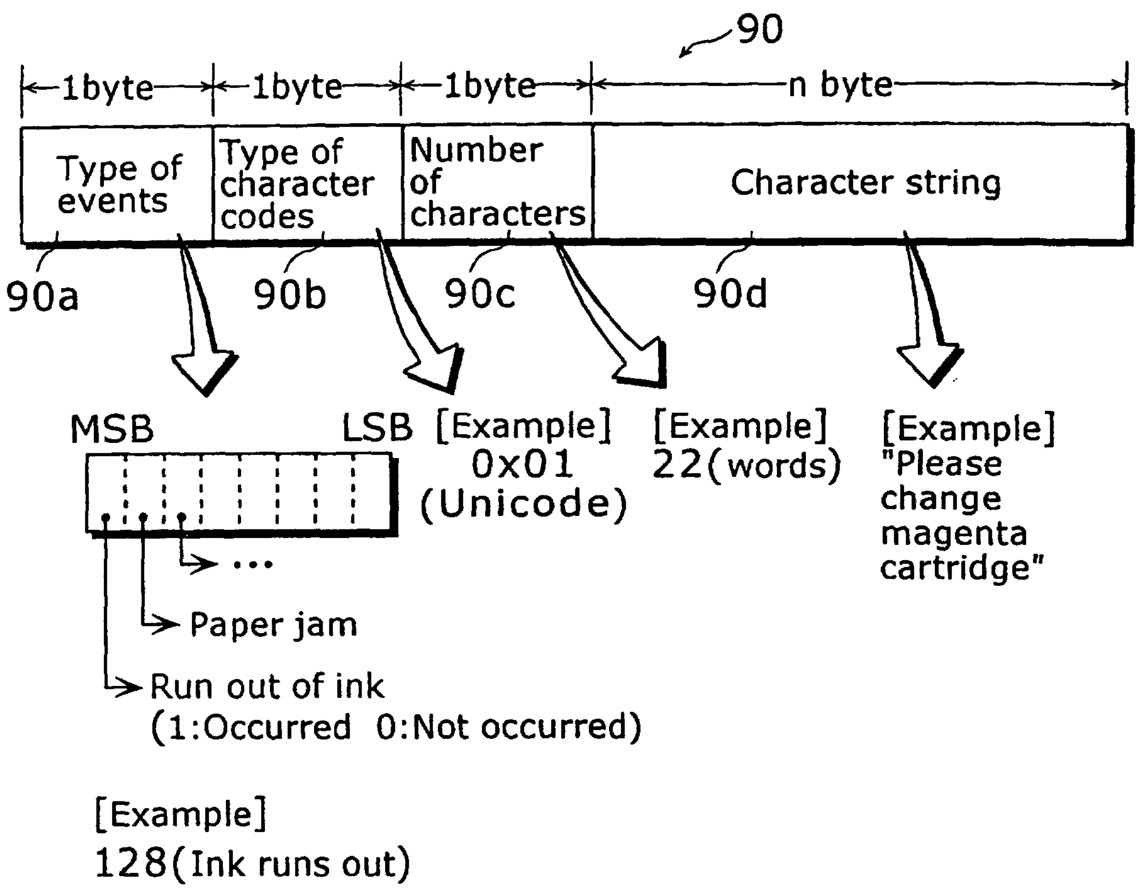


FIG.20B

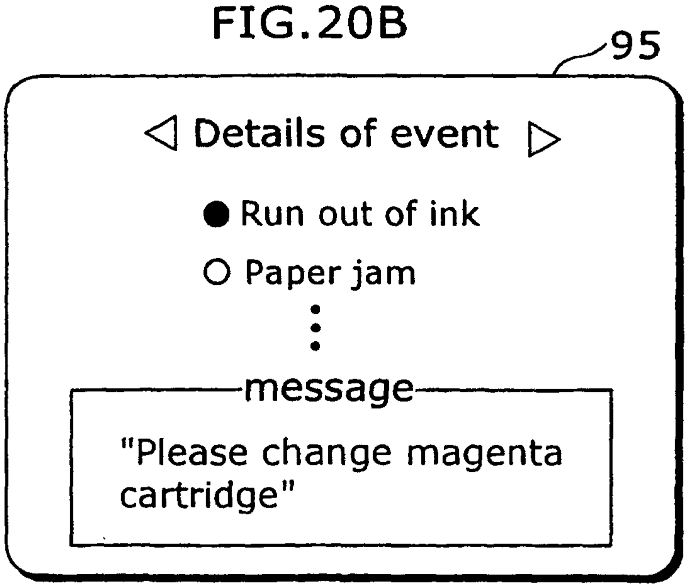

FIG. 21

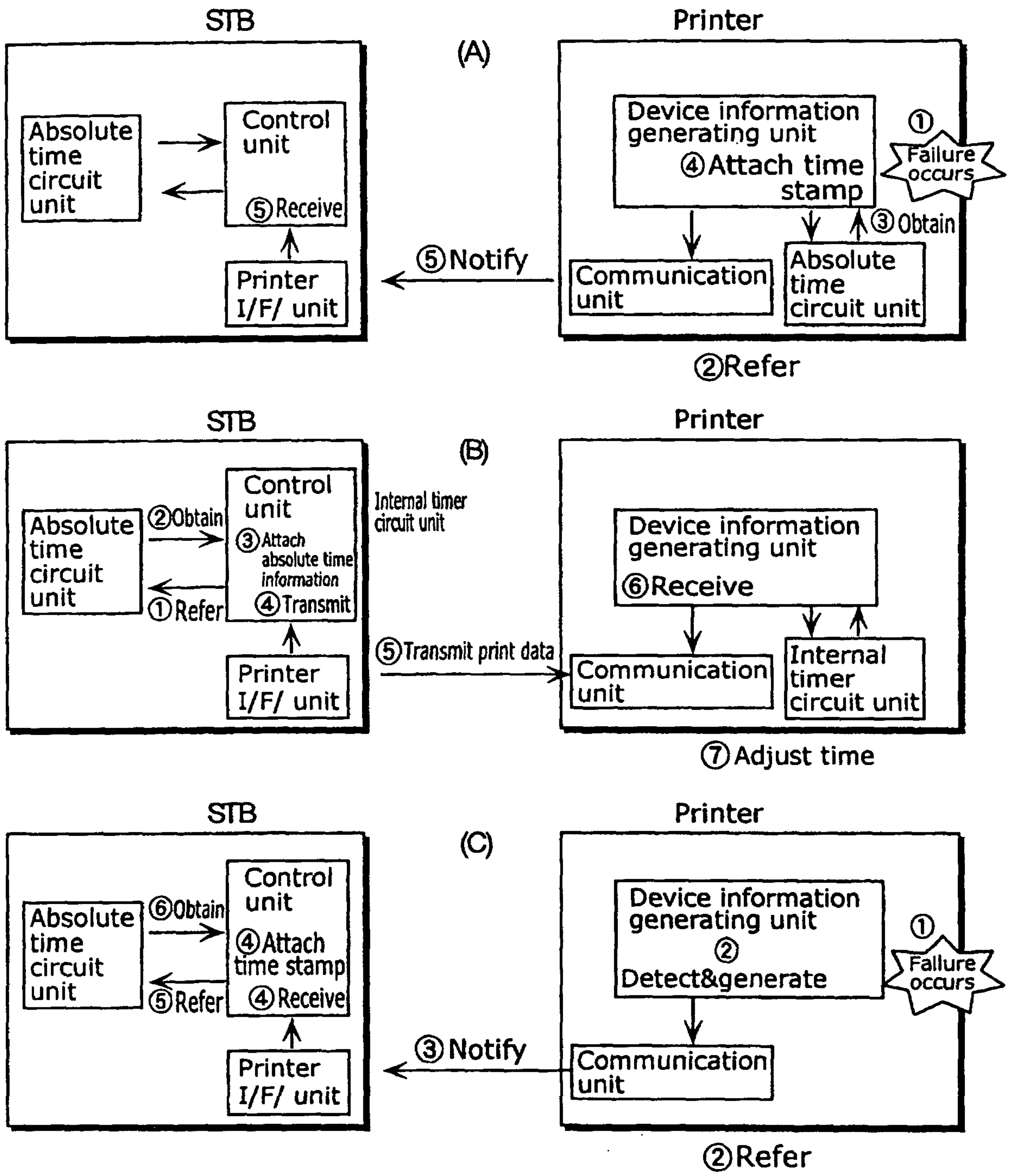
STB
Printer
(A)
Absolute time circuit unit
Control unit
⑤Receive
Printer I/F/ unit
⑤Notify
Device information generating unit
④Attach time stamp
①
Failure occurs
③Obtain
Communication unit
Absolute time circuit unit
②Refer
STB
Printer
(B)
Absolute time circuit unit
②Obtain
①Refer
Control unit
③Attach absolute time information
④Transmit
Printer I/F/ unit
Internal timer circuit unit
⑤Transmit print data
Device information generating unit
⑥Receive
Communication unit
Internal timer circuit unit
⑦Adjust time
STB
Printer
(C)
Absolute time circuit unit
⑥Obtain
⑤Refer
Control unit
④Attach time stamp
④Receive
Printer I/F/ unit
③Notify
Device information generating unit
②
Detect&generate
①
Failure occurs
Communication unit
②Refer

## INTERNATIONAL SEARCH REPORT

International application No. PCT/JP03/03388

**A. CLASSIFICATION OF SUBJECT MATTER**

Int.Cl[7] G06F17/60

According to International Patent Classification (IPC) or to both national classification and IPC

**B. FIELDS SEARCHED**

Minimum documentation searched (classification system followed by classification symbols)

Int.Cl[7] G06F17/60

Documentation searched other than minimum documentation to the extent that such documents are included in the fields searched

Jitsuyo Shinan Koho 1922-1996 Toroku Jitsuyo Shinan Koho 1994-2003
Kokai Jitsuyo Shinan Koho 1971-2003 Jitsuyo Shinan Toroku Koho 1996-2003

Electronic data base consulted during the international search (name of data base and, where practicable, search terms used)

JICST FILE(JOIS), WPI, INSPEC(DIALOG)

**C. DOCUMENTS CONSIDERED TO BE RELEVANT**

| Category* | Citation of document, with indication, where appropriate, of the relevant passages | Relevant to claim No. |
|---|---|---|
| X | JP 2001-297237 A (Fuji Photo Film Co., Ltd.), 26 October, 2001 (26.10.01), (Family: none) | 1-27,30-42, 66-70 |
| X | JP 2002-63434 A (Seiko Epson Corp.), 28 February, 2002 (28.02.02), (Family: none) | 24-39,56-65 |
| X | JP 2002-31988 A (Hyper-Marketing Co., Ltd.), 31 January, 2002 (31.01.02), & US 2002/59106 A1 & DE 10122911 A1 & GB 2368937 A | 24-27,30-39, 43-65 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search: 22 May, 2003 (22.05.03)

Date of mailing of the international search report: 03 June, 2003 (03.06.03)

Name and mailing address of the ISA/ Japanese Patent Office

Authorized officer

Facsimile No.

Telephone No.

Form PCT/ISA/210 (second sheet) (July 1998)

**INTERNATIONAL SEARCH REPORT**

International application No.
PCT/JP03/03388

**Box I Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

Claims 1-23, 35-48, 66-70 define the inventions of a communication device for ordering an expendable part of a printer, a printer, an expendable part order accepting device for accepting the order, and a communication system. Claims 24-30, 34, 49-65 define the inventions of a communication device and a printer for allowing the printer to create maintenance information and transmitting a service request message. Claims 31-33 define the invention of a communication device for receiving a response from a printer and outputting/displaying information on the printer.

(continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☒ No protest accompanied the payment of additional search fees.

Form PCT/ISA/210 (continuation of first sheet (1)) (July 1998)

**INTERNATIONAL SEARCH REPORT**

International application No.
PCT/JP03/03388

Continuation of Box No.II of continuation of first sheet(1)

The claims 1-23, 35-48, 66-70, claims 24-30, 34, 49-65, and claims 31-33 are not so linked as to form a single general inventive concept.

Form PCT/ISA/210 (extra sheet) (July 1998)